# EUROPÄISCHE PATENTSCHRIFT

(11) **EP 4 244 584 B1**
(45) Veröffentlichungstag und Bekanntmachung des Hinweises auf die Patenterteilung: **19.02.2025**
(21) Anmeldenummer: 20807004.5
(22) Anmeldetag: 12.11.2020
(51) Int. Cl.: G01F 1/84, G01F 15/18

(54) **STRÖMUNGSTEILER SOWIE DAMIT GEBILDETES FLUIDLEITUNGSSYSTEM**
FLOW DIVIDER AND FLUID LINE SYSTEM FORMED THEREWITH
DIVISEUR DE FLUX ET SYSTÈME DE LIGNE DE FLUIDE FORMÉ AVEC CELUI-CI

(43) Veröffentlichungstag der Anmeldung: 20.09.2023
(73) Patentinhaber: Endress+Hauser Flowtec AG, 4153 Reinach (CH)
(72) Erfinder: ALIOLI, Mattia, 4102 Binningen (CH); KUMAR, Vivek, 4123 Allschwil (CH); WERNER, Marc, 79639 Grenzach-Wyhlen (DE); SCHLACHTER, Natalie, 79664 Wehr (DE)
(74) Vertreter: Hahn, Christian
(86) Internationale Anmeldenummer: PCT/EP2020/081924
(87) Internationale Veröffentlichungsnummer: WO 2022/100836

(56) Entgegenhaltungen:
- EP-A1- 2 843 375
- EP-A1- 3 301 411
- EP-B1- 2 843 375
- WO-A1-2017/105493
- WO-A1-2020/023056

## Beschreibung

Die Erfindung betrifft einen Strömungsteiler zum Verbinden von dem Führen eines strömenden Fluids dienlichen Fluidleitungen. Darüberhinaus betrifft die Erfindung ein mit einem solchen Strömungsteiler gebildetes Fluidleitungssystem.

Aus der EP 2 843 375 A1, der US-A 48 01 897, der US-A 2008/0184816, der US-A 2011/0154912, der US-A 2017/0219398, der US-A 2018/0313487, der WO-A 2006/107297, der WO-A 2006/118557, der WO-A 2009/078880, der WO-A 2009/123632, der WO-A 2015/162617, WO-A 2015/085025 der WO-A 2017/048235, der WO-A 2017/105493 oder der WO-A 2017/198440 ist jeweils ein - gelegentlich auch als Verteiler-, Sammel- oder Hosenstück bezeichneter - Strömungsteiler zum Verbinden von dem Führen eines strömenden Fluids dienlichen Rohren bekannt wie auch die Verwendung eines solchen Strömungsteilers als Leitungsverzweigung oder als Leitungsvereinigung eines Fluidleitungssystems.

Jeder der Strömungsteiler weist jeweils ein von einer Wandung umhülltes Lumen auf, das sich sowohl von einer in einem ersten Strömungsteiler verorteten ersten Strömungsteileröffnung als auch von einer von nämlicher ersten Strömungsteileröffnung seitlich beabstandet in nämlichem ersten Strömungsteilerende verorteten zweiten Strömungsteileröffnung bis zu einer in einem, insb. von einem Anschlußflansch gefaßten, zweiten Strömungsteilerende verorteten kreisförmigen dritten Strömungsteileröffnung erstreckt, derart, daß das Lumen eine die beiden Strömungsteilerenden imaginär verbindende Hauptträgheitsachse sowie eine erste Symmetrieebene und eine dazu senkrechte zweite Symmetrieebene aufweist, und daß die beiden Symmetrieebenen einander in der Hauptträgheitsachse imaginär schneiden und daß das Lumen zur Hauptträgheitsachse senkrechte, ebene Querschnittsflächen mit jeweils einem in der ersten Symmetrieebene verorteten geometrischen Schwerpunkt aufweist. Die Wandungen des Strömungsteilers kann beispielsweise aus einem Metall, wie z.B. einem Edelstahl, bestehen. Von den vorbezeichneten Querschnittsflächen entspricht eine im ersten Strömungsteilerende verortete, mit deren geometrischen Schwerpunkt von der Hauptträgheitsachse des Lumens entfernte erste Querschnittsfläche der ersten Strömungsteileröffnung des Strömungsteilers, eine ebenfalls im ersten Strömungsteilerende verortete, mit deren geometrischen Schwerpunkt sowohl von der Hauptträgheitsachse des Lumens als auch vom geometrischen Schwerpunkt der vorbezeichneten ersten Querschnittsfläche entfernte zweite Querschnittsfläche der zweiten Strömungsteileröffnung des Strömungsteilers und eine im zweiten Strömungsteilerende verortete, mit deren geometrischen Schwerpunkt auf der Hauptträgheitsachse des Lumens liegende dritte Querschnittsfläche der dritten Strömungsteileröffnung des Strömungsteilers. Typischerweise ist die dritte Querschnittsfläche eines solchen Strömungsteilers, nicht zuletzt zwecks einer einfachen Anbindung an eine das Medium zu- bzw. weiterführende Rohrleitung, jeweils kreisförmig ausgebildet, während die ersten und zweiten Querschnittsflächen sowohl kreisförmig als auch, wie beispielsweise in der WO-A 2017/048235 oder der WO-A 2017/198440 gezeigt, ovalförmig oder auch, wie beispielsweise in der -WO-A 2017/105493 gezeigt, halbkreisförmig ausgebildet sein können. Zudem weist jede der Querschnittsflächen naturgemäß jeweils einen Abstand zur vorbezeichneten ersten Querschnittsfläche, gemessen als ein Abstand einer Projektion des geometrischen Schwerpunkts der jeweiligen der Querschnittsflächen auf die vorbezeichnete Hauptträgheitsachse zum geometrischen Schwerpunkt der ersten Querschnittsfläche auf, wobei der Abstand der ersten und zweiten Querschnittsflächen zur ersten Querschnittsfläche jeweils einer (Gesamt-)Länge des Lumens entspricht.

Wie ferner in der US-A 2008/0184816, der US-A 2011/0154912, der US-A 2017/0219398, der US-A 2018/0313487, der WO-A 2006/107297, der WO-A 2006/118557, der WO-A 2009/078880, der WO-A 2009/123632, der WO-A 2015/162617, der WO-A 2017/048235, der WO-A 2017/105493, der WO-A 2017/198440 oder auch der WO-A 2008/024112 jeweils gezeigt, kann jeder der Strömungsteiler zudem beispielsweise ein integraler Bestandteil eines, insb. dem Messen wenigstens einer physikalischen Meßgröße eines ein einer Rohrleitung strömenden Fluids dienlichen, Fluidleitungssystems sein, beispielsweise nämlich als Leitungsvereinigung eines zwei im Betrieb vibrierende Meßrohre aufweisenden Coriolis-Massendurchfluß-Meßgeräts ausgebildet sein. Jedes der vorbezeichneten Fluidleitungssysteme weist dementsprechend außer dem Strömungsteiler jeweils wenigstens zwei Fluidleitungen auf, von denen jeweils eine erste Fluidleitung mit einem jeweiligen Endabschnitt stoffschlüssig mit der ersten Strömungsteileröffnung und eine zweite Fluidleitung mit einem jeweiligen Endabschnitt stoffschlüssig mit der zweiten Strömungsteileröffnung verbunden ist, derart, daß ein jeweiliges Lumen der ersten Fluidleitung unter Bildung eines ersten Strömungspfades und ein jeweiliges Lumen der zweiten Fluidleitung unter Bildung eines zum ersten Strömungspfad parallelen zweiten Strömungspfades in das Lumen des Strömungsteilers kommunizieren. Die Wandungen der Fluidleitungen können beispielsweise ebenfalls aus einem Metall, wie z.B. einem Edelstahl, bestehen. Das vorbezeichnete Fluidleitungssystem kann u.a. so verwendete werden, daß dessen Strömungsteiler als Leitungsvereinigung dient, etwa um - wie auch in der US-A 2017/0219398, der US-A 2018/0313487 oder der WO-A 2008/024112 gezeigt - separate, nämlich durch die erste Fluidleitung bzw. die zweite Fluidleitung an den Strömungsteiler geführte Fluidströme, ggf. auch voneinander unabhängig und/oder mit voneinander abweichenden Zusammensetzungen, mittels des Strömungsteilers (wieder) zusammenzuführen bzw. miteinander zu vermischen.

Darüberhinaus kann ein Fluidleitungssystem der vorgenannten Art, nicht zuletzt bei Verwendung in einem Coriolis-Massendurchfluß-Meßgerät, ferner auch einen, hier als Leitungsverzweigung dienlichen, zum vorbezeichneten (ersten) Strömungsteiler beispielsweise baugleichen, weiteren (zweiten) Strömungsteiler aufweisen. Nämlicher zweiter Strömungsteiler ist - analog zum ersten Strömungsteiler - jeweils mit dessen ersten Leitungsende sowohl mit einem vom mit dem ersten Strömungsteiler verbundenen ersten Leitungsende entfernten zweiten Leitungsende der ersten Fluidleitung als auch mit einem vom ersten Leitungsende der ebenfalls mit dem ersten Strömungsteiler verbundene ersten Leitungsende entfernten zweiten Leitungsende der zweiten Fluidleitung verbunden, derart das sowohl das Lumen der ersten Fluidleitung als auch das Lumen der zweiten Fluidleitung sowohl mit dem Lumen des ersten Strömungsteilers als auch mit dem Lumen des zweiten Strömungsteilers kommuniziert bzw. daß die zweite Strömungsteileröffnung der zweiten Fluidleitung in die erste Strömungsteileröffnung des zweiten Strömungsteilers und die zweite Strömungsteileröffnung der zweiten Fluidleitung in die zweite Strömungsteileröffnung des zweiten Strömungsteilers münden, so daß im Ergebnis mittels des jeweiligen Fluidleitungssystems zwei strömungstechnisch parallel geschaltete, nämlich durch die erste Fluidleitung bzw. die zweite Fluidleitung führende Strömungspfade bereitgestellt sind.

Die vorbezeichneten Fluidleitungssysteme können, wie bereits erwähnt, zudem jeweils als integraler Bestandteil eines, beispielsweise vibronischen, Meßwandlers ausgebildet sein, der dazu dient bzw. eingerichtet ist, wenigstens ein mit wenigstens einer Meßgröße - beispielsweise einem Massenstrom (Massendurchflußrate), einer Dichte oder einer Viskosität - des hindurchströmenden Fluids korrespondierenden, nämlich wenigsten einen von nämlicher Meßgröße abhängigen Signalparameter - beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel - aufweisenden Meßsignals zu generieren. Nämlicher Meßwandler wiederum kann unter Bildung eines (vibronischen) Meßsystems, beispielsweise nämlich eines Coriolis-Massendurchfluß-Meßgeräts, eines vibronischen Dichte-Meßgeräts und/oder eines vibronischen Viskosität-Meßgeräts, mit einer entsprechenden Meß- und Betriebselektronik verbunden sein.

Für den erwähnten Fall, daß es sich bei dem Meßwandler um einen vibronischen Meßwandler handelt, sind die erste und zweiten Fluidleitungen im besonderen jeweils auch dafür eingerichtet, von dem auszumessenden Fluid durchströmt und währenddessen zwecks Generierung des wenigstens einen Meßsignals vibrieren gelassen zu werden, wobei als Meßsignal typischerweise wenigstens ein Schwingungsbewegungen der ersten und/oder zweiten Fluidleitungen repräsentierendes Schwingungsmeßsignal mit wenigstens einer von einer Dichte des in den Fluidleitungen geführten Fluids abhängigen Signalfrequenz und/oder einer von einer Massendurchflußrate abhängigen Phasenwinkel dient. Zum Anregen bzw. Aufrechterhalten mechanischer Schwingungen der Fluidleitungen, beispielsweise nämlich von gegengleichen Biegeschwingungen der ersten und zweiten Fluidleitungen, umfaßt jedes der vorbezeichneten Fluidleitungssysteme bzw. der damit gebildeter Meßwandler ferner jeweils wenigstens einen elektromechanischen, beispielsweise nämliche elektrodynamischen, Schwingungserreger. Darüberhinaus weist ein solches Fluidleitungssystem wenigstens einen, beispielsweise zumindest an der ersten Fluidleitung angebrachten und/oder zumindest in deren Nähe plazierten, Schwingungssensor zum Erzeugen des wenigstens einen mit der Meßgröße korrespondierenden Meßsignals auf. Nicht zuletzt für den vorbezeichneten Fall, daß der Meßwandler bzw. das damit gebildet Meßsystem dafür vorgesehen ist, einen Massenstrom bzw. einen Massendurchfluß des hindurchströmenden Fluids zu messen, kann ein solches Fluidleitungssystem auch wenigstens zwei voneinander entfernt an der ersten und/oder zweiten Fluidleitung angebrachte und/oder zumindest in deren Nähe plazierte, ggf. auch baugleiche Schwingungssensoren umfassen, die eingerichtet sind, jeweils ein mit der Meßgröße korrespondierendes Meßsignal zu erzeugen, insb. derart, daß zwischen den beiden Meßsignalen eine von der Massendurchflußrate abhängige Phasendifferenz etabliert ist. Zwecks Ermittlung der Meßgröße werden die beiden Fluidleitungen von solchen vibronischen Meßwandler typischerweise zu gegengleichen Biegeschwingungen in einem Antriebs- oder auch Nutzmode, nämlich zu Schwingungen auf wenigstens einer als Nutzfrequenz für die Messung dienlichen Schwingungsfrequenz aktiv angeregt, beispielsweise auf einer oder mehren momentanen Resonanzfrequenzen von dem Fluidleitungssystem innwohnenden natürlichen Schwingungsmoden und/oder - wie u.a. auch in der eingangs erwähnten US-A 48 01 897 gezeigt - mittels einer in der Meßgerät-Elektronik vorgesehenen, an den wenigstens einen Schwingungserreger als auch den wenigstens einen Schwingungssensor elektrisch gekoppelten, ggf. als Phasen verriegelte Regelschleife (*PLL -phase locked loop*) ausgebildeten elektronischen Treiberschaltung.

Die vorbezeichneten, als Meßwandler dienlichen Fluidleitungssysteme sind zudem im besonderen dafür vorgesehen bzw. dafür eingerichtet, in den Verlauf einer Rohrleitung eingesetzt zu werden, derart, daß ein an den Meßwandler herangeführter Fluidstrom mittels eines der beiden Strömungsteiler, mithin innerhalb des Meßwandlers in zwei separate Fluidströme aufgeteilt wird, und daß nämliche Fluidströme mittels des anderen der Strömungsteiler, mithin ebenfalls innerhalb des Meßwandlers, wieder zu einem einzigen Fluidstrom zusammengeführt werden, so daß der jeweilige Meßwandler strömungstechnisch bzw. nach außen *quasi* als ein einziges Rohr wirkt und zudem mittels Standardflanschverbindungen sehr einfach und ohne weiteren technischen Aufwand an die korrespondierenden Segmente der Rohrleitung angeschlossen werden kann. Derartige Fluidleitungssysteme bzw. damit gebildete, beispielsweise nämlich dem Generieren von von einem Massenstrom des strömenden Fluids abhängigen Corioliskräften dienliche, vibronische Meßwandler werden u.a. auch von der Anmelderin selbst hergestellt bzw. im Verbund mit einer jeweils passend konfektionierten Meßelektronik als Coriolis-Massendurchfluß-Meßgerät bzw. als Coriolis-Massendurchfluß-/Dichte-Meßgerät, beispielsweise unter der Warenbezeichnung "*PROMASS F 200", "PROMASS G 100", "PROMASS O 100", "PROMASS 83E", "PROMASS 84F"*, *"CNGmass", "LPGmass"* oder "*Dosimass",* angeboten.

Es ist bekannt, daß in Fluidleitungssystemen der vorgenannten Art ein im hindurchströmenden Fluid provozierter Druckverlust (Druckabfall) in erheblichem Maße auch durch den oder die darin verbauten Strömungsteiler bzw. die geometrische Form von deren jeweiligen Lumen bestimmt ist; dies im besonderen auch in der Weise, daß eine Abhängigkeit des Druckverlustes von der jeweiligen Reynoldszahl des Fluids nicht linear ist und zudem auch erheblich durch ggf. auftretende Störeinflüssen, wie etwa Turbulenzen oder Temperaturschwankungen im Fluids bzw. variierenden Partikelfrachten und/oder Blasenbildungen, beeinflussbar sein kann. Bei Verwendung eines solchen Fluidleitungssystems in einem Meßsystem kann wiederum dessen jeweilige Meßgenauigkeit vom vorbezeichneten Druckverlust mitbestimmt sein, mithin kann eine entsprechender Meßfehler nicht linear von der Reynoldszahl des zu jeweils messenden Fluids abhängig sein bzw. trotz nominell stationärer Strömung eine erhebliche, gleichwohl nicht erwünschte Varianz aufweisen.

Dem Rechnung tragend besteht eine Aufgabe der Erfindung darin, einen verbesserten Strömungsteiler der vorbezeichneten Art bereitzustellen, der in einem hindurchströmenden Fluid im Vergleich zu konventionellen Strömungsteilern bei gleicher Reynoldszahl einen geringeren spezifischen, nämlich auf eine Einbaulänge normierten Druckverlust provoziert und/oder bei dem der Druckverlust im Vergleich zu konventionellen Strömungsteilern stabiler ist, nämlich bei gleichbleibender Reynoldszahl weniger variiert, und/oder ein entsprechend verbessertes Fluidleitungsystem bereitzustellen; dies im besonderen auch dafür, um eine Meßgenauigkeit bzw. Reproduzierbarkeit von mittels eines solchen Fluidleitungssystems gebildeten Meßsystemen generierten Meßwerten weiter zu erhöhen.

Zur Lösung der Aufgabe besteht die Erfindung in einem, beispielsweise auch als Leitungsverzweigung oder als Leitungsvereinigung dienlichen, Strömungsteiler zum Verbinden von dem Führen eines strömenden Fluids dienlichen Fluidleitungen, welcher Strömungsteiler ein von einer Wandung, beispielsweise aus einem Metall, umhülltes, sich sowohl von einer in einem ersten Strömungsteilerende verorteten, beispielsweise kreisförmigen, ersten Strömungsteileröffnung als auch von einer von nämlicher ersten Strömungsteileröffnung beabstandet im ersten Strömungsteilerende verorteten, beispielsweise kreisförmigen, zweiten Strömungsteileröffnung bis zu einer in einem, beispielsweise von einem Anschlußflansch gefaßten, zweiten Strömungsteilerende verorteten, beispielsweise kreisförmigen, dritten Strömungsteileröffnung erstreckendes Lumen umfaßt. Das Lumen des erfindungsgemäßen Strömungsteilers weist eine die ersten und zweiten Strömungsteilerenden imaginär verbindende Hauptträgheitsachse sowie eine erste Symmetrieebene und eine dazu senkrechte zweite Symmetrieebene auf, welche ersten und zweiten Symmetrieebenen einander in der Hauptträgheitsachse imaginär schneiden. Zudem weist das Lumen des erfindungsgemäßen Strömungsteilers zur Hauptträgheitsachsesenkrechte, ebene Querschnittsflächen mit jeweils einem in der ersten Symmetrieebene verorteten geometrischen Schwerpunkt auf. Von den Querschnittsflächen entspricht eine im ersten Strömungsteilerende verortete, mit deren geometrischen Schwerpunkt von der Hauptträgheitsachse des Lumens entfernte erste Querschnittsfläche der ersten Strömungsteileröffnung des Strömungsteilers, eine ebenfalls im ersten Strömungsteilerende verortete, mit deren geometrischen Schwerpunkt sowohl von der Hauptträgheitsachse des Lumens als auch vom geometrischen Schwerpunkt der ersten Querschnittsfläche entfernte zweite Querschnittsfläche der zweiten Strömungsteileröffnung des Strömungsteilers und eine im zweiten Strömungsteilerende verortete, mit deren geometrischen Schwerpunkt auf der Hauptträgheitsachse des Lumens liegende dritte Querschnittsfläche der dritten Strömungsteileröffnung des Strömungsteilers. Jede der Querschnittsflächen des Lumens weist wiederum jeweils einen Abstand zᵢ zur dritten Querschnittsfläche, gemessen als ein Abstand einer Projektion des geometrischen Schwerpunkts der jeweiligen der Querschnittsflächen auf die Hauptträgheitsachse zum geometrischen Schwerpunkt der dritten Querschnittsfläche, sowie sich jeweils vom jeweiligen geometrischen Schwerpunkt bis zur Wandung erstreckende und jeweils in einem Winkel ϕ (-180°≤ ϕ ≤ 180°) zu einer jeweiligen Bezugsachse, nämlich einer sowohl in der jeweiligen Querschnittsfläche als auch in der ersten Symmetrieebene des Lumens liegenden und zudem senkrecht auf dessen Hauptträgheitsachse stehenden gedachten Achse stehende Radien auf. Jeder in einem Winkel ϕ = 0° zur jeweiligen Bezugsachse stehende, von der zweite Symmetrieebene weg weisende Radius Rᵢ(0°) einer jeden Querschnittsfläche erfüllt jeweils eine durch einen der jeweiligen Querschnittsfläche zugewiesenen und durch einen jeweils sieben Koeffizienten, nämlich jeweils erste und zweite Ausdehnungskoeffizienten aᵢ, bᵢ, erste und zweite Symmetriekoeffizienten m₁ᵢ, m₂ᵢ sowie erste, zweite und dritte Formkoeffizienten n₁ᵢ, n₂ᵢ und n₃ᵢ enthaltenden Koeffizientensatz **Pᵢ** (**Pᵢ** = [aᵢ bᵢ m₁ᵢ m₂ᵢ n₁ᵢ n₂ᵢ n₃ᵢ]) definierte und jeweils mit dem größten Radius R₀ der dritten Querschnittsfläche skalierte Berechnungsvorschrift fᵢ(ϕ, **Pᵢ**): $\begin{matrix}{R}_{i} \left(φ\right) = {R}_{0} ⋅ {r}_{i} \left(φ\right) = {f}_{i} \left(φ, {P}_{i}\right) = {f}_{i} \left(φ, \left[\begin{matrix}{a}_{i} & {b}_{i} & {m}_{1 i} & {m}_{2 i} & {n}_{1 i} & {n}_{2 i} & {n}_{3 i}\end{matrix}\right]\right) \\ = {R}_{0} ⋅ \sqrt[- {n}_{1 i}]{{\left|\frac{1}{{a}_{i}}cos\left(\frac{{m}_{1 i}}{4}φ\right)\right|}^{{n}_{2 i}} + {\left|\frac{1}{{b}_{i}}sin\left(\frac{{m}_{2 i}}{4}φ\right)\right|}^{{n}_{3 i}}} ;\end{matrix}$
dies im besonderen in der Weise, daß die Radien R₁(ϕ) der ersten Querschnittsfläche des Lumens eine durch einen ersten Koeffizientensatz **P₁** = [a₁ b₁ m₁₁ m₂₁ n₁₁ n₂₁ n₃₁] definierte erste Berechnungsvorschrift f₁(ϕ, **P₁**) mit a₁ = (0,4...0,5), b₁ = (0,4...0,5), beispielsweise b₁ = a₁, m₁₁ = 4, m₂₁ = 4, n₁₁ = (2...3), beispielsweise nämlich n₁₁ = 2,8, n₂₁ = (2...3), beispielsweise nämlich n₂₁ = 2,2 und n₃₁ = (2...3), beispielsweise nämlich n₃₁ = 2,2, erfüllen, daß die Radien R₂(ϕ) der zweiten Querschnittsfläche des Lumens eine durch einen zweiten
Koeffizientensatz **P₂** = [a₂ b₂ m₁₂ m₂₂ n₁₂ n₂₂ n₃₂] definierte zweite Berechnungsvorschrift f₂(ϕ, **P₂**) mit a₂ = a₁, b₂ = b₁, m₁₂ = m₁₁, m₂₂ = m₂₁, n₁₂ = n₁₁, n₂₂ = n₂₁ und n₃₂ = n₃₁ erfüllen, daß die Radien R₃(ϕ) der dritten Querschnittsfläche des Lumens eine durch einen dritten
Koeffizientensatz **P₃** = [a₃ b₃ m₁₃ m₂₃ n₁₃ n₂₃ n₃₃] definierte dritte Berechnungsvorschrift f₃(ϕ, **P₃**) mit a₃ = 1, b₃ = a₃, m₁₃ = 4, m₂₃ = m₁₃, n₁₃ = 2.0, n₂₃ = n₁₃ und n₃₃ = n₁₃ erfüllen, und daß die Radien R₄(ϕ) einer mit deren geometrischen Schwerpunkt auf der Hauptträgheitsachse des Lumens liegende, in einem Abstand z₄ zur dritten Querschnittsfläche, der mehr als 20% des Abstands z₁ (z₄> 0,2 · z₁) und weniger als 45% des Abstands z₁ (z₄ < 0,45 · z₁) beträgt, verorteten vierten Querschnittsfläche des Lumens eine durch einen vierten
Koeffizientensatz **P₄** = [a₄ b₄ m₁₄ m₂₄ n₁₄ n₂₄ n₃₄] definierte vierte Berechnungsvorschrift f₄(ϕ, **P₄**) mit a₄ =(0,95...1), b₄ = (0,45...0,7), m₁₄ = 4, m₂₄ = 4, n₁₄ = 3.0, n₂₄ = n₁₄ und n₃₄ = (3...4) erfüllen.

Darüberhinaus besteht die Erfindung in einem mittels eines solchen Strömungsteiler gebildeten Fluidleitungssystem, das außer dem erfindungsgemäßen Strömungsteiler eine, beispielsweise als starres und/oder zumindest abschnittsweise kreiszylindrisches Rohr ausgebildete, erste Fluidleitung mit einem von einer Wandung, beispielsweise aus einem Metall, umhüllten, sich von einem ersten Leitungsende der ersten Fluidleitung bis zu einem zweiten Leitungsende nämlicher zweiten Fluidleitung erstreckenden Lumen sowie wenigstens eine, beispielsweise als starres und/oder zumindest abschnittsweise kreiszylindrisches Rohr ausgebildete und/oder zur ersten Fluidleitung baugleiche, zweite Fluidleitung mit einem von einer Wandung, beispielsweise aus einem Metall, umhüllten, sich von einem ersten Leitungsende der zweiten Fluidleitung bis zu einer in einem zweiten Leitungsende nämlicher zweiten Fluidleitung erstreckenden Lumen umfaßt, derart, daß sowohl die erste Fluidleitung mit deren ersten Leitungsende als auch die zweite Fluidleitung mit deren ersten Leitungsende jeweils mit dem ersten Strömungsteilerende des ersten Strömungsteilers verbunden sind, derart, daß das Lumen der ersten Fluidleitung unter Bildung eines durch die erste Strömungsteileröffnung des ersten Strömungsteilers hindurchführenden ersten Strömungspfades und das Lumen der zweiten Fluidleitung unter Bildung eines durch die zweite Strömungsteileröffnung des ersten Strömungsteilers hindurchführenden zweiten Strömungspfades jeweils mit dem Lumen des ersten Strömungsteilers kommunizieren.

Nach einer ersten Ausgestaltung der Erfindung ist ferner vorgesehen, daß die Radien R₅(ϕ) einer mit deren geometrischen Schwerpunkt auf der Hauptträgheitsachse des Lumens liegende, in einem Abstand z₅ zur dritten Querschnittsfläche, der nicht weniger als 10% des Abstands z₁ (z₅≥ 0,1 · z₁) und nicht mehr als 20% des Abstands z₁ (z₅≤ 0,2 · z₁) beträgt, verorteten fünften Querschnittsfläche des Lumens eine durch einen fünften Koeffizientensatz **P₅** = [a₅ b₅ m₁₅ m₂₅ n₁₅ n₂₅ n₃₅] definierte fünften Berechnungsvorschrift f₅(ϕ, **P₅**) mit a₅ = (0,97...1), b₅ = (0,65...1), m₁₅ = 4, m₂₅ = 4, n₁₅ = 3, n₂₅ = 3 und n₃₅ = (2...3,5) erfüllt. Diese Ausgestaltung der Erfindung weiterbildend ist die fünfte Querschnittsfläche ferner so ausgebildet, daß deren Ausdehnungskoeffizient b₅ in Abhängigkeit von deren Abstand z₅, normiert auf den Abstand z₁ der ersten Querschnittsfläche (xy₁), eine Berechnungsvorschrift:
${b}_{5} = \left(\begin{matrix}47,2 & … & 47,8\end{matrix}\right) ⋅ {\left(\frac{{z}_{5}}{{z}_{1}}\right)}^{2} - \left(\begin{matrix}17,5 & … & 17,18\end{matrix}\right) ⋅ \left(\frac{{z}_{5}}{{z}_{1}}\right) + \left(\begin{matrix}2,2 & … & 2,4\end{matrix}\right)$, beispielsweise nämlich ${b}_{5} = 47,51 ⋅ {\left(\frac{{z}_{5}}{{z}_{1}}\right)}^{2} - 17,88 ⋅ \left(\frac{{z}_{5}}{{z}_{1}}\right) + 2,31$, erfüllt und/oder daß der vorbezeichnete Formkoeffizient n₃₅ in Abhängigkeit von deren Abstand z₅, normiert auf den Abstand z₁ der ersten Querschnittsfläche (xy₁), eine Berechnungsvorschrift:
${n}_{35} = \left(\begin{matrix}2,4 & … & 2,6\end{matrix}\right) ⋅ \left(\frac{{z}_{5}}{{z}_{1}}\right) + \left(\begin{matrix}7,7 & … & 8\end{matrix}\right)$, beispielsweise nämlich ${n}_{35} = 2,55 ⋅ \left(\frac{{z}_{5}}{{z}_{1}}\right) + 7,87$n₃₅ erfüllt, und/oder daß ein Verhältnis n₃₅ / b₅ von deren dritten Formkoeffizienten n₃₅ zu deren zweiten Ausdehnungskoeffizienten b₅ mehr als 2 und/oder weniger als 6 beträgt.

Nach einer zweiten Ausgestaltung der Erfindung ist ferner vorgesehen, daß von keiner der Querschnittsflächen des Lumens der jeweilige dritte Formkoeffizient n₃ᵢ größer als der dritte Formkoeffizient n₃₄ der vierten Querschnittsfläche ist.

Nach einer dritten Ausgestaltung der Erfindung ist ferner vorgesehen, daß die vierte Querschnittsfläche so ausgebildet ist, daß ein Verhältnis n₃₄ / b₄ von deren dritten Formkoeffizienten n₃₄ zu deren zweiten Ausdehnungskoeffizienten b₄ nicht weniger als 5,5 und/oder nicht mehr als 7 beträgt.

Nach einer vierten Ausgestaltung der Erfindung ist ferner vorgesehen, daß die Radien R₆(ϕ) einer mit deren geometrischen Schwerpunkt auf der Hauptträgheitsachse des Lumens liegende, in einem Abstand z₆ zur dritten Querschnittsfläche, der mehr als 45% des Abstands z₁ (z₆ > 0,45 · z₁) und weniger als 60% des Abstands z₁ (z₆ < 0,6 · z₁) beträgt, verorteten sechsten Querschnittsfläche des Lumens eine durch einen sechsten Koeffizientensatz **P₆** = [a₆ b₆ m₁₆ m₂₆ n₁₆ n₂₆ n₃₆] definierte sechsten Berechnungsvorschrift f₆(ϕ, **P₆**) mit a₆ = (0,98...1), b₆ = (0,7...0,8), m₁₆ = 4, m₂₆ = 4, n₁₆ = 1, n₂₆ = (2...2,5) und n₃₆ = (2,1...2,8) erfüllt. Diese Ausgestaltung der Erfindung weiterbildend ist die sechste Querschnittsfläche ferner so ausgebildet, daß deren dritter Formkoeffizient n₃₆ in Abhängigkeit vom Abstand z₆, normiert auf den Abstand z₁, eine Berechnungsvorschrift: ${n}_{36} = \left(\begin{matrix}3,4 & … & 3,6\end{matrix}\right) ⋅ \left(\frac{{z}_{6}}{{z}_{1}}\right) + \left(\begin{matrix}0,5 & … & 0,7\end{matrix}\right)$, beispielsweise nämlich ${n}_{36} = 3,57 ⋅ \left(\frac{{z}_{6}}{{z}_{1}}\right) + 0,64$ erfüllt.

Nach einer fünften Ausgestaltung der Erfindung ist ferner vorgesehen, daß die Radien R₇(ϕ) einer mit deren geometrischen Schwerpunkt von der Hauptträgheitsachse (z) des Lumens entfernten und in einem Abstand z₇ zur dritten Querschnittsfläche, der mehr als 70% des Abstands z₁ (z₇ > 0,7 · z₁) und weniger als 95% des Abstands z₁ (z₇ < 0,95 · z₁) beträgt, verorteten siebten Querschnittsfläche des Lumens eine durch einen siebten Koeffizientensatz P₇ = [a₇ b₇ m₁₇ m₂₇ n₁₇ n₂₇ n₃₇] definierte siebte Berechnungsvorschrift f₇(ϕ, **P₇**) mit a₇ = (0,40...0,55), b₇ = a₇, m₁₇ = 3 m₂₇ = 3 n₁₇ = (2,7...2,8) n₂₇ = (2,3...2,5) und n₃₇ = n₂₇ erfüllen und daß die Radien R₈(ϕ) einer mit deren geometrischen Schwerpunkt von der Hauptträgheitsachse des Lumens entfernten und in einem Abstand z₈ zur dritten Querschnittsfläche, der gleich dem Abstand z₇ der siebten Querschnittsfläche ist, verorteten achten Querschnittsfläche des Lumens eine durch einen achten Koeffizientensatz P₈ = [a₈ b₈ m₁₈ m₂₈ n₁₈ n₂₈ n₃₈] definierte achte Berechnungsvorschrift f₈(ϕ, P₈) mit a₈ = a₇, b₈ = b₇, m₁₈ = m₁₇, m₂₈ = m₂₇, n₁₈ = n₁₇, n₂₈ = n₂₇ und n₃₈ = n₃₇ erfüllen. Diese Ausgestaltung der Erfindung weiterbildend ist ferner vorgesehen, daß der geometrische Schwerpunkt der siebten Querschnittsfläche des Lumens einen Abstand x₇ zur zweiten Symmetrieebene und der geometrische Schwerpunkt der achten Querschnittsfläche des Lumens einen Abstand x₈ zur zweiten Symmetrieebene aufweist und daß ein jeweiliger Betrag jedes der Abstände x₇, x₈ der siebten und achten Querschnittsflächen normiert auf den Radius R₇(0°) bzw. R₈(0°) der jeweiligen siebten bzw. achten Querschnittsfläche jeweils wenigstens gleich dem jeweiligen ersten Ausdehnungskoeffizienten a₇ bzw. a₈ der siebten bzw. achten Querschnittsfläche ist und/oder jeweils höchstens einem 1,2-fachen des jeweiligen ersten Ausdehnungskoeffizienten a₇ bzw. a₈ der siebten bzw. achten Querschnittsfläche entspricht.

Nach einer sechsten Ausgestaltung der Erfindung ist ferner vorgesehen, daß von jeder der Querschnittsflächen des Lumens der jeweilige erste Ausdehnungskoeffizient aᵢ nicht weniger als 0,9 und/oder nicht mehr als 1 beträgt.

Nach einer siebenten Ausgestaltung der Erfindung ist ferner vorgesehen, daß von jeder der Querschnittsflächen des Lumens der jeweilige zweite Ausdehnungskoeffizient bᵢ nicht weniger als 0,4 und/oder nicht mehr als 1 beträgt.

Nach einer achten Ausgestaltung der Erfindung ist ferner vorgesehen, daß von jeder der Querschnittsflächen des Lumens der jeweilige erste Formkoeffizienten n₁ᵢ nicht weniger als 2 und/oder nicht mehr als 3 beträgt.

Nach einer neunten Ausgestaltung der Erfindung ist ferner vorgesehen, daß von jeder der Querschnittsflächen des Lumens der jeweilige zweite Formkoeffizienten n₂ᵢ nicht weniger als 2 und/oder nicht mehr als 3 beträgt.

Nach einer zehnten Ausgestaltung der Erfindung ist ferner vorgesehen, daß der geometrische Schwerpunkt der ersten Querschnittsfläche des Lumens einen Abstand x₁ zur zweiten Symmetrieebene und der geometrische Schwerpunkt der zweiten Querschnittsfläche des Lumens einen Abstand x₂ zur zweiten Symmetrieebene aufweist, und daß ein jeweiliger Betrag jedes der Abstände x₁, x₂ der ersten und zweiten Querschnittsflächen normiert auf den Radius R₁(0°) bzw. R₂(0°) der jeweiligen ersten bzw. zweiten Querschnittsfläche jeweils wenigstens einem 1,05-fachen, beispielsweise wenigstens einem 1,2-fachen, des jeweiligen ersten Ausdehnungskoeffizienten a₁ bzw. a₂ der ersten bzw. zweiten Querschnittsfläche und/oder jeweils höchstens einem 1,5-fachen, beispielsweise höchstens einem 1,3-fachen, des jeweiligen ersten Ausdehnungskoeffizienten a₁ bzw. a₂ der ersten bzw. zweiten Querschnittsfläche entspricht.

Nach einer elften Ausgestaltung der Erfindung ist ferner vorgesehen, daß keiner der ersten Ausdehnungskoeffizienten aᵢ eines der Koeffizientensätze Pᵢ größer ist als der erste Ausdehnungskoeffizient a₁ des ersten Koeffizientensatzes P₁.

Nach einer zwölften Ausgestaltung der Erfindung ist ferner vorgesehen, daß keiner der zweiten Ausdehnungskoeffizienten bᵢ eines der Koeffizientensätze Pᵢ größer ist als der zweite Ausdehnungskoeffizient b₁ des ersten Koeffizientensatzes P₁.

Nach einer dreizehnten Ausgestaltung der Erfindung ist ferner vorgesehen, daß keine Querschnittsfläche einen Flächeninhalt aufweist, der größer als ein Flächeninhalt der dritten Querschnittsfläche ist.

Nach einer vierzehnten Ausgestaltung der Erfindung ist ferner vorgesehen, daß keine Querschnittsfläche einen Flächeninhalt aufweist, der kleiner als ein Flächeninhalt der ersten Querschnittsfläche oder der zweiten Querschnittsfläche ist.

Nach einer fünfzehnten Ausgestaltung der Erfindung ist ferner vorgesehen, daß ein Verhältnis eines Flächeninhalts der dritten Querschnittsfläche zu einem Flächeninhalt der ersten Querschnittsfläche oder der zweiten Querschnittsfläche jeweils größer als 1 und/oder kleiner als 1,5 ist.

Nach einer sechzehnten Ausgestaltung der Erfindung ist ferner vorgesehen, daß der Abstand z₁ der ersten Querschnittsfläche zur dritten Querschnittsfläche gleich dem Abstand z₂ (z₂ = z₁) der zweiten Querschnittsfläche zur dritten Querschnittsfläche ist.

Nach einer siebzehnten Ausgestaltung der Erfindung ist ferner vorgesehen, daß der Abstand z₁ der ersten Querschnittsfläche zur dritten Querschnittsfläche und/oder der Abstand z₂ (z₂ = z₁) der zweiten Querschnittsfläche zur dritten Querschnittsfläche einer Länge L des Lumens entspricht.

Nach einer achtzehnten Ausgestaltung der Erfindung ist ferner vorgesehen, daß die erste Strömungsteileröffnung dafür eingerichtet ist, mit einem, beispielsweise hohlzylindrischen, Endabschnitt einer ersten Fluidleitung, beispielsweise stoffschlüssig, verbunden zu werden, derart, daß ein Lumen der ersten Fluidleitung unter Bildung eines durch die erste Strömungsteileröffnung hindurchführenden ersten Strömungspfades mit dem Lumen des Strömungsteilers kommuniziert, daß die zweite Strömungsteileröffnung dafür eingerichtet ist, mit einem, beispielsweise hohlzylindrischen, Endabschnitt einer zweiten Fluidleitung, beispielsweise stoffschlüssig, verbunden zu werden, derart, daß ein Lumen der zweiten Fluidleitung unter Bildung eines durch die zweite Strömungsteileröffnung hindurchführenden, zum ersten Strömungspfad strömungstechnisch parallel geschalteten zweiten Strömungspfades mit dem Lumen des Strömungsteilers kommuniziert.

Nach einer neunzehnten Ausgestaltung der Erfindung ist ferner vorgesehen, daß die Wandung des Strömungsteilers aus einem rostfreien Stahl, beispielsweise einem Edelstahl, einem Duplexstahl oder einem Superduplexstahl, besteht.

Nach einer zwanzigsten Ausgestaltung der Erfindung ist ferner vorgesehen, daß die Wandung des Strömungsteilers aus einer Nickel-Molybdän-Legierung, insb. einer
Nickel-Molybdän-Chrom-Legierung, besteht.

Nach einer einundzwanzigsten Ausgestaltung der Erfindung ist ferner vorgesehen, daß die Wandung des Strömungsteilers aus AISI 304, AISI 304L, AISI 316L, WNr. 1.4401,
WNr. 1.4404, UNS *S31603,* WNr. 1.4410, WNr. 14501, Hastelloy B oder Hastelloy C, beispielsweise Hastelloy C-22, besteht.

Nach einer ersten Ausgestaltung des Fluidleitungssystems ist ferner vorgesehen, daß die Wandung der ersten Fluidleitung aus einem rostfreien Stahl, insb. einem Edelstahl, einem Duplexstahl oder einem Superduplexstahl, besteht.

Nach einer zweiten Ausgestaltung des Fluidleitungssystems ist ferner vorgesehen, daß die Wandung der zweiten Fluidleitung aus einem rostfreien Stahl, insb. einem Edelstahl, einem Duplexstahl oder einem Superduplexstahl, besteht.

Nach einer dritten Ausgestaltung des Fluidleitungssystems ist ferner vorgesehen, daß die Wandung der ersten Fluidleitung aus einer Nickel-Molybdän-Legierung, beispielsweise einer
Nickel-Molybdän-Chrom-Legierung, besteht.

Nach einer vierten Ausgestaltung des Fluidleitungssystems ist ferner vorgesehen, daß die Wandung der ersten Fluidleitung aus einer Nickel-Molybdän-Legierung, insb. einer
Nickel-Molybdän-Chrom-Legierung, besteht.

Nach einer fünften Ausgestaltung des Fluidleitungssystems ist ferner vorgesehen, daß die Wandung der ersten Fluidleitung aus AISI 304, AISI 304L, AISI 316L, WNr. 1.4401, WNr. 1.4404, UNS *S31603,* WNr. 1.4410, WNr. 14501, Hastelloy B oder Hastelloy C, beispielsweise Hastelloy C-22, besteht. Nach einer sechsten Ausgestaltung des Fluidleitungssystems ist ferner vorgesehen, daß die Wandung der zweiten Fluidleitung aus AISI 304, AISI 304L, AISI 316L, WNr. 1.4401, WNr. 1.4404, UNS *S31603,* WNr. 1.4410, WNr. 14501, Hastelloy B oder Hastelloy C, beispielsweise Hastelloy C-22, besteht.

Nach einer ersten Weiterbildung des Fluidleitungssystems der Erfindung umfaßt dieses weiters einen einem erfindungsgemäßen Strömungsteiler entsprechenden, beispielsweise auch zum ersten Strömungsteiler baugleichen, zweiten Strömungsteiler und sind sowohl die erste Fluidleitung mit deren zweiten Leitungsende als auch die Fluidleitung mit deren zweiten Leitungsende jeweils mit dem ersten Strömungsteilerende des zweiten Strömungsteilers verbunden, derart, daß das Lumen der ersten Fluidleitung unter Bildung eines sowohl durch die erste Strömungsteileröffnung des ersten Strömungsteilers als auch durch die erste Strömungsteileröffnung des zweiten Strömungsteilers hindurchführenden ersten Strömungspfades und das Lumen der zweiten Fluidleitung unter Bildung eines sowohl durch die zweite Strömungsteileröffnung des ersten Strömungsteilers als auch durch die zweite Strömungsteileröffnung des zweiten Strömungsteilers hindurchführenden, zum ersten Strömungspfad strömungstechnisch parallel geschalteten zweiten Strömungspfades sowohl mit dem Lumen des ersten Strömungsteilers als auch mit dem Lumen des zweiten Strömungsteilers kommunizieren.

Nach einer zweiten Weiterbildung des Fluidleitungssystems der Erfindung umfaßt dieses weiters eine elektro-mechanische Erregeranordnung, die eingerichtet ist, elektrische Leistung in mechanische Schwingungen der ersten und zweiten Fluidleitungen bewirkende mechanische Leistung zu wandeln.

Nach einer dritten Weiterbildung des Fluidleitungssystems der Erfindung umfaßt dieses weiters eine Sensoranordnung, die eingerichtet ist, mechanische Schwingungen der ersten und zweiten Fluidleitungen zu erfassen und wenigstens ein Schwingungen wenigstens einer der ersten und zweiten Fluidleitungen repräsentierendes, beispielsweise elektrisches, Schwingungssignal bereitzustellen.

Ein Grundgedanke der Erfindung besteht darin, den spezifischen Druckverlust von Strömungsteilern dadurch zu minimieren, daß eine in der Nähe der vorbezeichneten ersten Querschnittsfläche verortete, gleichwohl von den vorbezeichneten zweiten und dritten Querschnittsflächen entfernte vierte Querschnittsfläche einer sich einer Rechteckform an nährenden Superellipse entspricht bzw. daß ein entsprechender, nämlich lediglich superelliptische Querschnittsflächen aufweisender Übergangsbereich zwischen der vorbezeichneten ersten Querschnittsfläche und den vorbezeichneten zweiten und dritten Querschnittsflächen gebildet ist. Ein Vorteil der Erfindung besteht u.a. darin, daß insbesondere auch bei Verwendung des Strömungsteilers als Leitungsvereinigung eines Fluidleitungssystems, mithin bei in Richtung der ersten Querschnittsfläche durch den Strömungsteiler strömen gelassenem Fluid eine im Vergleich zu herkömmlichen Strömungsteilern bzw. damit gebildeten Fluidleitungssystemen signifikante Verbesserung des spezifischen Druckverlusts wie auch dessen Stabilität erzielt werden kann

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: schematisiert in einer perspektivischen Seitenansicht ein Strömungsteiler;
- Fig. 2a, 2b: schematisiert in weiteren verschiedene Seitenansichten ein Strömungsteiler gemäß Fig. 1;
- Fig. 3a, 3b: schematisiert Verwendungen eines Strömungsteilers gemäß Fig. 1 bzw. jeweils mittels eines Strömungsteilers gemäß Fig. 1 gebildete Fluidleitungssysteme;
- Fig. 4: in einem dreidimensionalen Diagramm verschiedene Querschnittsflächen eines Lumens eines Strömungsteilers gemäß Fig. 1 bzw. dementsprechende Strömungsquerschnitte nämlichen Strömungsteilers;
- Fig. 5a, 5b: schematisiert verschiedene Querschnittsflächen eines Lumens gemäß Fig. 4;
- Fig. 6a, 6b: schematisiert weitere, nämlich zwischen der Querschnittsfläche gemäß Fig. 5b und jeder der Querschnittsflächen gemäß Fig. 5a verortete, Querschnittsflächen des Lumens gemäß Fig. 4;
- Fig. 7a,: schematisiert eine weitere, nämlich zwischen der Querschnittsfläche gemäß Fig. 6a bzw. 6b und jeder der Querschnittsflächen gemäß Fig. 5a verortete, Querschnittsfläche des Lumens gemäß Fig. 4;
- Fig. 7b: schematisiert weitere, nämlich jeweils zwischen der Querschnittsfläche gemäß Fig. 7a und jeder der Querschnittsflächen gemäß Fig. 5a verortete, Querschnittsflächen des Lumens gemäß Fig. 4;
- Fig. 8: schematisiert in einer ersten Seitenansicht ein weiteres Ausführungsbeispiel eines mittels eines Strömungsteilers gemäß Fig. 1 gebildete Fluidleitungssystems;
- Fig. 9: schematisiert in einer perspektivischen zweiten Seitenansicht das Fluidleitungssystem gemäß Fig. 8; und
- Fig. 10: schematisiert in einer Seitenansicht einen mittels des Fluidleitungssystems gemäß Fig. 8 bzw. 9 gebildeten, dem Messen wenigstens einer physikalischen Meßgröße eines in einer Rohrleitung strömenden Fluids dienlichen Meßwandler.

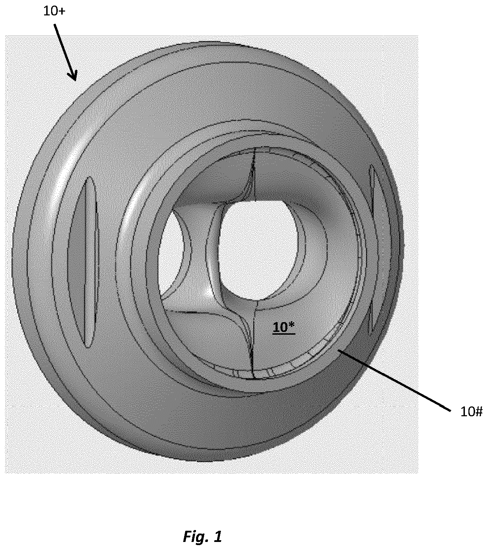

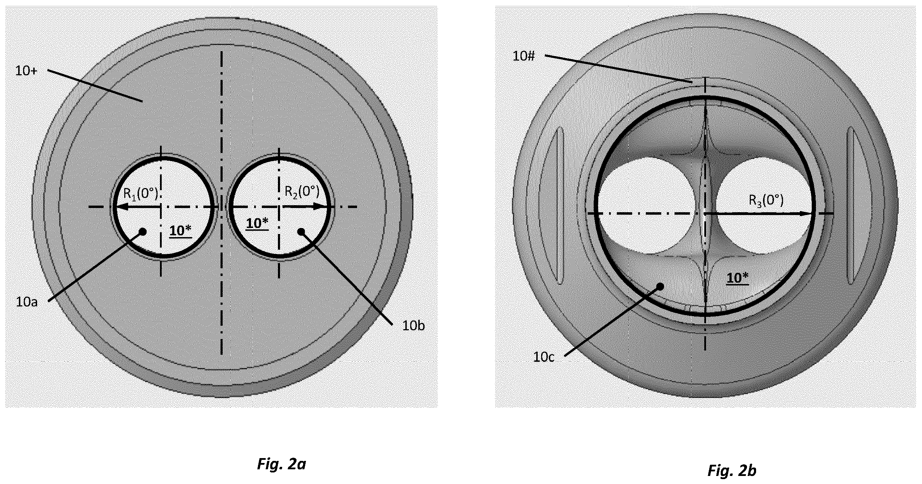

In den Fig. 1, 2a bzw. 2b schematisiert in verschiedenen Seitenansichten ein Ausführungsbeispiel eines erfindungsgemäßen Strömungsteilers gezeigt, beispielsweise nämlich eines Strömungsteilers zum Verbinden von dem Führen eines strömenden Fluids dienlichen Fluidleitungen. Der Strömungsteiler weist ein von einer Wandung, beispielsweise aus einem Metall, umhülltes Lumen 10* auf, das sich - wie auch in Fig 2a und 2b jeweils dargestellt bzw. aus einer Zusammenschau der Fig. 1, 2a und 2b ohne weiteres ersichtlich - sowohl von einer in einem ersten Strömungsteilerende 10+ verorteten ersten Strömungsteileröffnung 10a als auch von einer im Strömungsteilerende 10+ verorteten, gleichwohl von der Strömungsteileröffnung 10a beabstandeten zweiten Strömungsteileröffnung 10b bis zu einer in einem zweiten Strömungsteilerende 10# verorteten kreisförmigen dritten Strömungsteileröffnung 10c erstreckt. Nach einer Ausgestaltung der Erfindung besteht die Wandung des Strömungsteilers aus einem rostfreien Stahl, beispielsweise einem Edelstahl, insb. AISI *(American Iron and Steel Institute)* 304, AISI 304L, AISI 316L, WNr. (*Werkstoffnummer*) 1.4401, WNr. 1.4404 oder UNS (*Unified Numbering System for Metals and Alloys*) S31603, einem Duplexstahl, einem Superduplexstahl, insb. WNr. 1.4410 oder WNr. 14501, einer Nickel-Molybdän-Legierung, insb. Hastelloy B, einer Nickel-Molybdän-Chrom-Legierung, insb. Hastelloy C bzw. Hastelloy C-22. Alternativ oder in Ergänzung kann der erfindungsgemäße Strömungsteiler beispielsweise auch durch ein additives bzw. generatives Fertigungsverfahren, beispielsweise nämlich einem 3D-Druckverfahren, hergestellt werden.

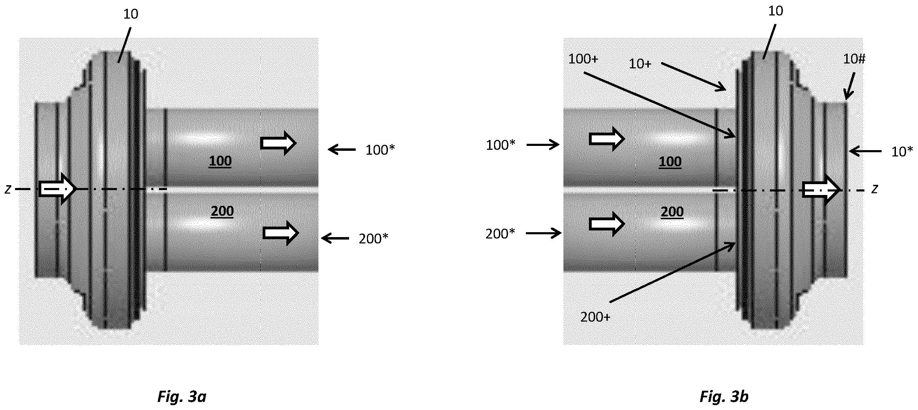

Zum einfachen, gleichwohl Leckage freien Verbinden des Strömungsteilers 10 mit einer Rohrleitung kann das Strömungsteilerende 10# beispielsweise von einem, ggf. auch standardisierten Anschlußflansch gefaßt sein bzw. in einen, ggf. auch von einem solchen Anschlußflansch gefaßten Anschlußstutzen münden. Der erfindungsgemäße Strömungsteilers kann beispielsweise zudem auch ein, ggf. auch integraler, Bestandteil eines Fluidleitungssystems zum Führen eines strömenden Fluids sein, beispielsweise nämlich in einem solchen Fluidleitungssystem - wie auch in Fig. 3a schematisiert dargestellt - als eine Leitungsverzweigung oder - wie auch in Fig. 3b schematisiert dargestellt - als eine Leitungsvereinigung verwendet werden.

Dementsprechend ist nach einer Ausgestaltung der Erfindung die Strömungsteileröffnung 10a des Strömungsteilers 10 ferner dafür eingerichtet, mit einem - beispielsweise hohlzylindrischen - Endabschnitt einer ersten Fluidleitung 100, ggf. auch stoffschlüssig, verbunden zu werden, derart, daß - wie auch in Fig. 3a dargestellt - ein Lumen 100* der Fluidleitung 100 unter Bildung eines durch nämliche Strömungsteileröffnung 10a hindurchführenden ersten Strömungspfades mit dem Lumen 10* kommuniziert, und ist die zweite Strömungsteileröffnung 10b dafür eingerichtet, mit einem - beispielsweise hohlzylindrischen - Endabschnitt einer zweiten Fluidleitung 200, insb. stoffschlüssig, verbunden zu werden, derart, daß - wie auch in Fig. 3a bzw. 3b dargestellt - ein Lumen 200 der Fluidleitung 200 unter Bildung eines durch nämliche Strömungsteileröffnung 10b hindurchführenden, beispielsweise zum ersten Strömungspfad strömungstechnisch parallel geschalteten, zweiten Strömungspfades ebenfalls mit dem Lumen 10* kommuniziert. Das vorbezeichnete Fluidleitungssystem wiederum kann auch Bestandteil eines Meßwandlers, beispielsweise nämlich eines vibronischen Meßwandlers, etwa gemäß einer der eingangs erwähnten Patentanmeldungen bzw. Patente EP-A 816 807, US-A 2001/0037690, US-A 2008/0184816, US-A 2017/0219398, US-A 48 23 613, US-A 56 02 345, US-A 57 96 011, WO-A 90/15310, WO-A 00/08423, WO-A 2006/107297, WO-A 2006/118557, WO-A 2008/059262, WO-A 2008/013545, WO-A 2009/048457, WO-A 2009/078880, WO-A 2009/120223, WO-A 2009/123632, WO-A 2010/059157, WO-A 2013/006171, WO-A 2013/070191, WO-A 2015/162617, WO-A 2015085025 oder WO-A 2017/198440, bzw. eines mittels eines solchen Meßwandlers gebildeten, ggf. vibronischen Meßsystems, beispielsweise nämlich eines Coriolis-Massenduchfluß-Meßgeräts oder eines Dichte-Meßgeräts, sein. Alternativ oder in Ergänzung kann das Fluidleitungssystem beispielsweise auch Bestandteil einer Übergabestelle für eichpflichtigen Güterverkehr, wie z.B. eine Zapfanlage für Kraftstoffe bzw. eine Übergabestelle, sein. Bei der wenigstens einen Meßgröße kann es sich dementsprechend beispielsweise um eine Dichte, eine Viskosität oder eine Temperatur des Fluids handeln. Nämliche Meßgröße kann aber beispielsweise auch ein Strömungsparameter des Fluids, beispielsweise nämlich ein Massenstrom oder einer Volumenstrom, sein. Nicht zuletzt für den vorbezeichneten Fall, daß das Fluidleitungssystem Bestandteil eines vibronischen Meßwandlers bzw. eines damit gebildeten vibronischen Meßsystems ist, ist nach einer weiteren Ausgestaltung der Erfindung zumindest die Fluidleitung 100 zudem dafür eingerichtet, von Fluid durchströmt und währenddessen vibrieren gelassen zu werden. Darüberhinaus kann auch die Fluidleitung 200 dafür eingerichtet sein von Fluid durchströmt und währenddessen vibrieren gelassen zu werden; dies beispielsweise auch in der Weise, daß die beiden Fluidleitungen 100, 200 simultan von Fluid durchströmt und/oder währenddessen simultan, insb. nämlich gegengleich, vibrieren gelassen werden.

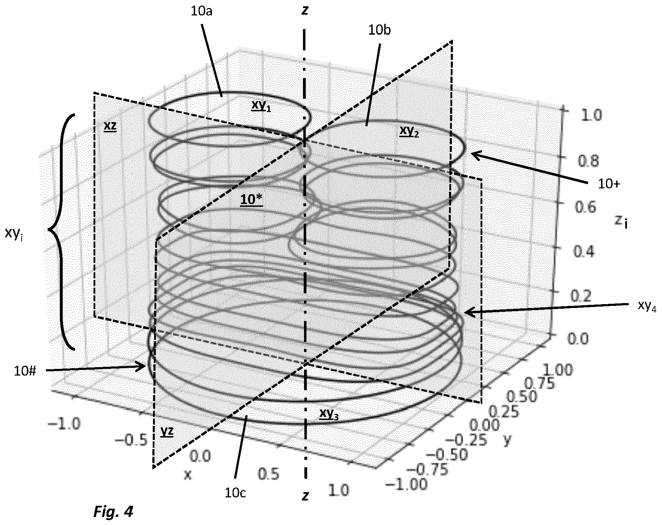

Wie in Fig. 4 schematisch dargestellt bzw. aus einer Zusammenschau der Fig. 1, 2a, 2b und 4 ohne weiteres ersichtlich, weist das Lumen 10* des erfindungsgemäßen Strömungsteilers 10 eine die ersten und zweiten Strömungsteilerenden 10+, 10# imaginär verbindende Hauptträgheitsachse z auf. Zudem ist das Lumen 10* spiegelsymmetrisch, derart, daß das Lumen 10* eine erste Symmetrieebene xz und eine dazu senkrechte zweite Symmetrieebene yz aufweist, welche ersten und zweiten Symmetrieebenen yz, xz einander in der Hauptträgheitsachse z imaginär schneiden, und weist das Lumen 10* zur Hauptträgheitsachse z senkrechte, ebene Querschnittsflächen xyᵢ mit jeweils einem in der ersten Symmetrieebene xz verorteten geometrischen Schwerpunkt auf. Von den vorbezeichneten Querschnittsflächen xyᵢ entspricht eine im Strömungsteilerende 10+ verortete, gleichwohl mit deren geometrischen Schwerpunkt von der Hauptträgheitsachse z entfernte, mithin einen Abstand x₁ zur Symmetrieebene yz aufweisende erste Querschnittsfläche xy₁ der Strömungsteileröffnung 10a, eine ebenfalls im Strömungsteilerende 10+ verortete, gleichwohl mit deren geometrischen Schwerpunkt sowohl vom geometrischen Schwerpunkt der Querschnittsfläche xy₁ als auch von der Hauptträgheitsachse z des Lumens 10* entfernte, mithin einen Abstand x₂ zur Symmetrieebene yz aufweisende zweite Querschnittsfläche xy₂ der Strömungsteileröffnung 10b und eine im zweiten Strömungsteilerende 10# verortete, mit deren geometrischen Schwerpunkt auf der Hauptträgheitsachse z liegende kreisförmige dritte Querschnittsfläche xy₃ der Strömungsteileröffnung 10c. Indem das Lumen 10* in der vorbezeichneten Weise spiegelsymmetrisch ist, sind die vorbezeichneten Abstände x1, x2 gleich und sind die beiden, beispielsweise jeweils auch kreisförmigen, Querschnittsfläche xy₁, xy₂ entsprechend kongruent zueinander. Nach einer weiteren Ausgestaltung der Erfindung ist der Strömungsteiler 10 bzw. dessen Lumen 10* zudem so ausgebildet, daß ein Verhältnis eines Flächeninhalts der Querschnittsfläche xy₃ zu einem Flächeninhalt der Querschnittsfläche xy₁ bzw. der Querschnittsfläche xy₂ jeweils größer als 1 und/oder kleiner als 1,5 ist. Alternativ oder in Ergänzung kann der Strömungsteiler 10 bzw. dessen Lumen 10* ferner so ausgebildet sein, daß keine Querschnittsfläche xyᵢ einen Flächeninhalt aufweist, der größer als der vorbezeichnete Flächeninhalt der Querschnittsfläche xy₃ ist, und/oder daß keine Querschnittsfläche xyᵢ einen Flächeninhalt aufweist, der kleiner als ein Flächeninhalt der Querschnittsfläche xy₁ oder der Querschnittsfläche xy₂ ist.

Naturgemäß weist jede der vorbezeichneten Querschnittsflächen xyᵢ des Lumens 10* - wie auch in Fig. 4 schematisch dargestellt bzw. aus einer Zusammenschau der Fign. 4, 5a, 5b, 6a, 6b, 7a bzw. 7b ohne weiteres ersichtlich - ferner jeweils eine Vielzahl von voneinander abweichenden und/oder einander gleichen Radien Rᵢ sowie jeweils einen Abstand zᵢ zur Querschnittsfläche xy₃, gemessen als ein Abstand einer Projektion des geometrischen Schwerpunkts der jeweiligen der Querschnittsflächen xyᵢ auf die Hauptträgheitsachse z zum geometrischen Schwerpunkt der Querschnittsfläche xy₃, auf. Der Abstand z₁ der Querschnittsfläche xy₁ zur Querschnittsfläche xy₃ ist dabei gleich dem Abstand z₂ (z₂ = z₁) der Querschnittsfläche xy₂ zur Querschnittsfläche xy₃. Zudem kann der vorbezeichnete Abstand z₁ bzw. der Abstand z₂ (z₂ = z₁) einer (Gesamt-) Länge L des Lumens 10* bzw. einer Baulänge des Strömungsteilers 10 entsprechen. Darüberhinaus weist das Lumen 10* ferner eine - letztlich das Aufteilen von Teilströmen initiierende bzw. Wiederzusammenführen von Teilströmen vollendende - Bifurkation (Gabelungspunk) bzw. eine Bifurkationsfläche xy_{B}, nämlich eine mit ihrem geometrischen Schwerpunkt die Bifurkation bildende Querschnittsfläche auf. Nach einer weiteren Ausgestaltung der Erfindung, ist vorgesehen, daß ein Abstand z_{B} der Bifurkationfläche xya zur Querschnittsfläche xy₃ mehr als 55% des Abstands z₁ (z_{B} > 0,55 · z₁) und/oder weniger als 65% des Abstands z₁ (z_{B} < 0,65 · z₁) beträgt.

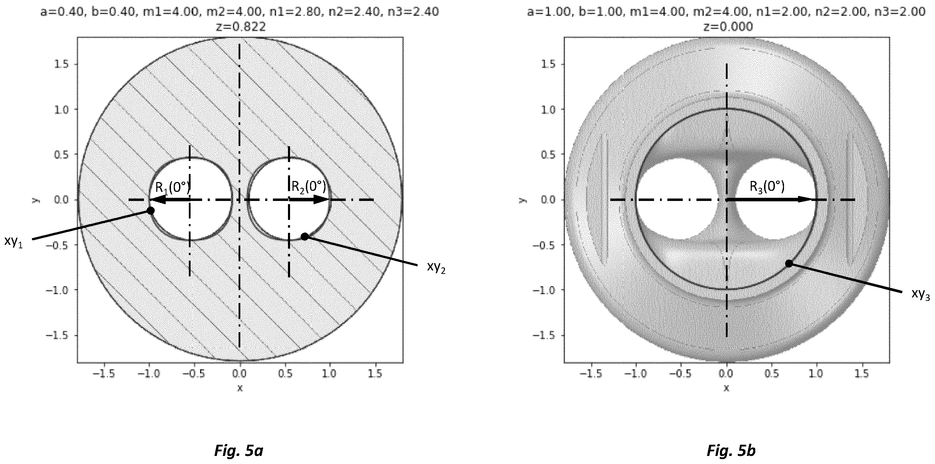

Wie auch in den Fign. 5a, 5b, 6a, 6b, 7a bzw. 7b jeweils dargestellt erstreckt sich jeder der vorbezeichneten Radien Rᵢ einer jeden Querschnittsfläche xyᵢ jeweils vom jeweiligen geometrischen Schwerpunkt nämlicher Querschnittsfläche xyᵢ bis zur Wandung und steht jeweils in einem Winkel ϕ (-180°≤ ϕ <_ 180°) zu einer jeweiligen Bezugsachse xᵢ, nämlich einer sowohl in der jeweiligen Querschnittsfläche xyᵢ als auch in der ersten Symmetrieebene xz des Lumens 10* liegenden und zudem senkrecht auf dessen Hauptträgheitsachse z stehenden gedachten Achse, wobei jeder in einem Winkel ϕ = 0° zur jeweiligen Bezugsachse xᵢ stehende Radius Rᵢ(0°) jeweils von der Symmetrieebene yz des Lumens 10*weg weist. Zudem erfüllt jeder Radius Rᵢ(ϕ) einer jeden Querschnittsfläche xyᵢ jeweils eine durch einen der jeweiligen Querschnittsfläche xyᵢ zugewiesenen und durch einen jeweils sieben Koeffizienten, nämlich jeweils einen ersten Ausdehnungskoeffizienten aᵢ, einen zweiten Ausdehnungskoeffizienten bᵢ, einen ersten Symmetriekoeffizienten m₁ᵢ, einen zweiten Symmetriekoeffizienten m₂ᵢ, einen ersten Formkoeffizienten n₁ᵢ, einen zweiten Formkoeffizienten n₂ᵢ und einen dritten Formkoeffizienten n₃ᵢ enthaltenden Koeffizientensatz (bzw. Parametervektor) **Pᵢ** (**Pᵢ** = [aᵢ bᵢ m₁ᵢ m₂ᵢ n₁ᵢ n₂ᵢ n₃ᵢ]) definierte, mithin mit nur einigen wenigen Variablen parametrisierte, und jeweils mit dem größten Radius R₀ der dritten Querschnittsfläche xy₃ (Rᵢ(ϕ) / R₀ -> rᵢ(ϕ)) skalierte Berechnungsvorschrift fᵢ(ϕ, **Pᵢ**): $\begin{matrix}{R}_{i} \left(φ\right) = {R}_{0} ⋅ {r}_{i} \left(φ\right) = {f}_{i} \left(φ, {P}_{i}\right) = {f}_{i} \left(φ, \left[\begin{matrix}{a}_{i} & {b}_{i} & {m}_{1 i} & {m}_{2 i} & {n}_{1 i} & {n}_{2 i} & {n}_{3 i}\end{matrix}\right]\right) \\ = {R}_{0} ⋅ \sqrt[- {n}_{1 i}]{{\left|\frac{1}{{a}_{i}}cos\left(\frac{{m}_{1 i}}{4}φ\right)\right|}^{{n}_{2 i}} + {\left|\frac{1}{{b}_{i}}sin\left(\frac{{m}_{2 i}}{4}φ\right)\right|}^{{n}_{3 i}}} .\end{matrix}$

Dementsprechend erfüllen die Radien R₁(ϕ) der Querschnittsfläche xy₁ eine durch einen ersten Koeffizientensatz **P₁** = [a₁ b₁ m₁₁ m₂₁ n₁₁ n₂₁ n₃₁] definierte erste Berechnungsvorschrift f₁(ϕ, **P₁**), die Radien R₂(ϕ) der Querschnittsfläche xy₂ dementsprechend eine durch einen zweiten Koeffizientensatz **P₂** = [a₂ b₂ m₁₂ m₂₂ n₁₂ n₂₂ n₃₃] definierte zweite Berechnungsvorschrift f₂(ϕ, **P₂**) und die Radien R₃(ϕ) der Querschnittsfläche xy₃ entsprechend eine durch einen dritten Koeffizientensatz **P₃** = [a₃ b₃ m₁₃ m₂₃ n₁₃ n₂₃ n₃₃] definierte dritte Berechnungsvorschrift f₃(ϕ, **P₃**), wobei der Koeffizientensatz P₁ für die Radien R₁(ϕ) mit a₁ = (0,4...0,5), b₁ = (0,4...0,5), m₁₁ = 4, m₂₁ = 4, n₁₁ = (2...3), beispielsweise nämlich mit n₁₁ = 2,8, n₂₁ = (2...3), beispielsweise nämlich mit n₂₁ = 2,2 und n₃₁ = (2...3), beispielsweise nämlich mit n₃₁ = 2,2 festgelegt ist. Da - wie bereits angedeutet - die beiden Querschnittsflächen xy₁, xy₂ kongruent ausgebildet sind, sind auch deren beider Berechnungsvorschriften f₁(ϕ, **P₁**), f₂(ϕ, **P₂**) gleich bzw. gilt entsprechend auch für die Koeffizientensätze P₁, P₂: P₂ = P₁, mithin a₂ = a₁, b₂ = b₁, m₁₂ = m₁₁, m₂₂ = m₂₁, n₁₂ = n₁₁, n₂₂ = n₂₁ und n₃₂ = n₃₁. Für den erwähnten Fall, daß die beiden Querschnittsfläche xy₁, xy₂ kreisförmig sind, ist zudem der Ausdehnungskoeffizienten b₁ des Koeffizientensatzes **P₁**, mithin ist der Ausdehnungskoeffizienten b₂ des Koeffizientensatzes **P₂** jeweils gleich dem Ausdehnungskoeffizienten a₁ gewählt, so daß also gilt: b₁ = b₂ = a₁ → R₁(ϕ) = R₃(ϕ) = a₁·R₀ = const. Für den Koeffizientensatz **P₃** zur Bestimmung der Radien R₃(ϕ) der kreisförmigen Querschnittsfläche xy₃ gilt dementsprechend gleichermaßen b₃ = a₃, m₁₃ = 4, m₂₃ = m₁₃, n₁₃ = 2, n₂₃ = n₁₃ und n₃₃ = n₁₃, wobei wiederum dessen Ausdehnungskoeffizient a₃ gleich Eins gesetzt ist (a₃ = 1).

Nach einer weiteren Ausgestaltung der Erfindung ist der Strömungsteiler 10 bzw. dessen Lumen 10* so ausgebildet, daß ein jeweiliger Betrag jedes der der vorbezeichneten Abstände x₁, x₂ der geometrischen Schwerpunkte der Querschnittsflächen xy₁, xy₂ normiert auf den Radius R₁(0°) bzw. R₂(0°) der jeweiligen ersten bzw. zweiten Querschnittsfläche jeweils wenigstens einem 1,05-fachen (x₁ / R₁(0°) ≥ 1,05 ·a₁, x₂ / R₂(0°) ≥ 1,05 · a₂), insb. wenigstens einem 1,2-fachen (x₁ / Rᵢ(0°) ≥ 1,2 · a₁, x₂ / R₂(0°) ≥ 1,2 - a₂), des jeweiligen ersten Ausdehnungskoeffizienten a₁ bzw. a₂ und/oder jeweils höchstens einem 1,5-fachen (x₁ / Rᵢ(0°) <_ 1,5 · a₁, x₂ / R₂(0°) <_ 1,5 - a₂), insb. höchstens einem 1,3-fachen (x₁ / R₁ (0°) ≤ 1,3 · a₁, x₂ / R₂(0°) ≤ 1,3 · a₂), des jeweiligen ersten Ausdehnungskoeffizienten a₁ bzw. a₂ entspricht.

Nach einer weiteren Ausgestaltung der Erfindung ist der Strömungsteiler 10 bzw. dessen Lumen 10* so ausgebildet, daß von jeder der vorbezeichneten Querschnittsflächen xyᵢ des Lumens 100 bzw. von jedem der vorbezeichneten Koeffizientensätze **Pᵢ** der jeweilige erste Ausdehnungskoeffizient aᵢ nicht weniger als 0,9 und/oder nicht mehr als 1 beträgt, und/oder daß von jeder der Querschnittsflächen xyᵢ bzw. von jedem der vorbezeichneten Koeffizientensätze **Pᵢ** der jeweilige zweite Ausdehnungskoeffizient bᵢ nicht weniger als 0,4 und/oder nicht mehr als 1 beträgt. Alternativ oder in Ergänzung ist der Strömungsteiler 10 ferner so ausgebildet, daß von jeder der vorbezeichneten Querschnittsflächen xyᵢ bzw. von jedem der vorbezeichneten Koeffizientensätze **Pᵢ** der jeweilige erste Formkoeffizient n₁ᵢ nicht weniger als 2 und/oder nicht mehr als 3 beträgt, und/oder daß von jeder der vorbezeichneten Querschnittsflächen xyᵢ bzw. von jedem der vorbezeichneten Koeffizientensätze **Pᵢ** der jeweilige zweite Formkoeffizient n₂ᵢ nicht weniger als 2 und/oder nicht mehr als 3 beträgt. Nicht zuletzt für den vorbeschriebenen Fall, daß keine der Querschnittsfläche xyᵢ einen Flächeninhalt aufweisen soll, der größer als der Flächeninhalt der Querschnittsfläche xy₃ ist, ist ferner vorgesehen, daß keiner der ersten Ausdehnungskoeffizienten aᵢ eines der Koeffizientensätze **Pᵢ** größer ist als der Ausdehnungskoeffizient a₁ des Koeffizientensatzes P₁ bzw. der zugehörigen Querschnittsfläche xy₁ und/oder keiner der zweiten Ausdehnungskoeffizienten bᵢ eines der Koeffizientensätze **Pᵢ** größer ist als der Ausdehnungskoeffizient b₁ des Koeffizientensatzes **P₁** bzw. der zugehörigen Querschnittsfläche xy₁.

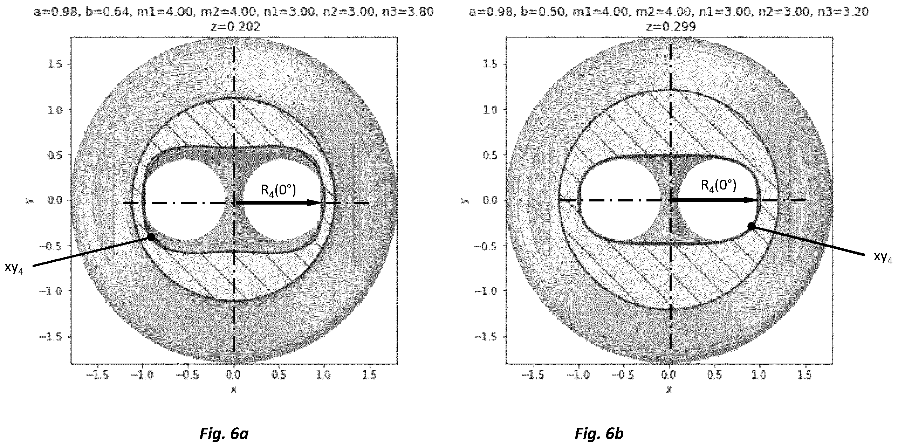

Das Lumen 10* des Strömungsteilers 10 weist erfindungsgemäß ferner wenigstens eine vierte Querschnittsfläche xy₄ auf, die mit deren geometrischen Schwerpunkt ebenfalls auf der Hauptträgheitsachse z des Lumens 10* liegt. Nämliche Querschnittsfläche xy₄ ist in einem Abstand z₄ zur Querschnittsfläche xy₃, der mehr als 20% des Abstands z₁ (z₄ > 0,2 · z₁) und weniger als 45% des Abstands z₁ (z₄ < 0,45 · z₁) beträgt, im Strömungsteiler verortet und erfindungsgemäß zudem so ausgebildet, daß deren Radien R₄(ϕ) eine durch einen vierten Koeffizientensatz **P₄** = [a₄ b₄ m₁₄ m₂₄ n₁₄ n₂₄ n₃₄] definierte vierte Berechnungsvorschrift f₄(ϕ, **P₄**) mit a₄ =(0,95...1), b₄ = (0,45...0,7), m₁₄ = 4, m₂₄ = 4, n₁₃ = 3.0, m₂₄ = n₁₄ und n₃₄ = (3...4) erfüllen, mithin daß - wie auch in Fig. 6a und 6b jeweils dargestellt - die Querschnittsfläche xy₄ einer sich einer Rechteckform an nährenden Superellipse entspricht.

Nach einer weiteren Ausgestaltung der Erfindung ist ferner vorgesehen, daß ein Verhältnis n₃₄ / b₄ des vorbezeichneten Formkoeffizienten n₃₄ zum vorbezeichneten Ausdehnungskoeffizienten b₄ nicht weniger als 5,5 und/oder nicht mehr als 7 beträgt und/oder daß die Radien R₄(ϕ) des vorbezeichneten Strömungsquerschnittes xy₄ in Abhängigkeit vom jeweiligen Abstand z₄ zur Querschnittsfläche xy₃, einem oder mehreren der folgenden Koeffizientensätze **P₄** entsprechen:

| z₄ | a₄ | b₄ | m₁₄ | m₂₄ | n₁₄ | n₂₄ | n₃₄ |
|---|---|---|---|---|---|---|---|
| 0,202 | 0,98 | 0,64 | 4 | 4 | 3 | 3 | 3,8 |
| 0,23 | 0,98 | 0,6 | 4 | 4 | 3 | 3 | 3,8 |
| 0,25 | 0,98 | 0,55 | 4 | 4 | 3 | 3 | 3,2 |
| 0,27 | 0,98 | 0,55 | 4 | 4 | 3 | 3 | 3,2 |
| 0,299 | 0,98 | 0,5 | 4 | 4 | 3 | 3 | 3,2 |
| 0,4 | 1 | 0,48 | 4 | 4 | 3 | 3 | 3,2 |

Nach einer anderen Ausgestaltung der Erfindung ist ferner vorgesehen, daß auch keine der Querschnittsflächen xyᵢ des Lumens 10*, die zwischen der vorbezeichneten superelliptischen Querschnittsfläche xy₄ und den Querschnittsfläche xy₁,xy₂ verortet sind bzw. deren Abstand zᵢ zur Querschnittsfläche xy₃ größer als der Abstand z₄ und kleiner als der Abstand z₁ bzw. z₂, insb. nämlich zumindest kleiner als 95% des ist der Abstand z₁ bzw. z₂, kreisförmig ausgebildet ist, und/oder daß auch keine der Querschnittsflächen xyᵢ des Lumens 10*, deren Abstand zᵢ zur Querschnittsfläche xy₃ kleiner als der vorbezeichnete Abstand z₄ und zumindest größer als 0,1 ist, kreisförmig ausgebildet ist. Alternativ oder in Ergänzung dazu ist ferner vorgesehen, daß von keiner weiteren der Querschnittsflächen xyᵢ der jeweilige dritte Formkoeffizient n₃ᵢ größer als der vorbezeichnete Formkoeffizient n₃₄ ist.

Nach einer weiteren Ausgestaltung der Erfindung weist das Lumen 10* dementsprechend - nicht zuletzt auch zwecks Bildung eines zwischen der kreisförmigen Querschnittsfläche xy₃ und der superelliptischen Querschnittsfläche xy₄ des Lumens 10* mit möglichst geringem Druckverlust vermittelnden (ersten) Übergangsbereichs - ferner eine fünfte Querschnittsfläche xy₅ auf, die mit ihrem geometrischen Schwerpunkt ebenfalls auf der Hauptträgheitsachse z liegt, und zwar in einem Abstand z₅ zur Querschnittsfläche xy₃, der nicht weniger als 10% des Abstands z₁ (z₅ ≥ 0,1 · z₁) und nicht mehr als 20% des Abstands z₁ (z₅ ≤ 0,2 · z₁) beträgt, und deren Radien R₅(ϕ) eine durch einen fünften Koeffizientensatz **P₅** = [a₅ b₅ m₁₅ m₂₅ n₁₅ n₂₅ n₃₅] definierte fünfte Berechnungsvorschrift f₅(ϕ, **P₅**) erfüllen, der wiederum mit a₅ = (0,97...1), b₅ = (0,65...1), m₁₅ = 4, m₂₅ = 4, n₁₅ = 3, n₂₅ = 3 und n₃₅ = (2...3,5) festgelegt ist. Um den vorbezeichneten Übergangsbereich effektiv wirksam, nämlich möglichst wenig Störungen im Strömungsprofil bewirkend bzw. nur einen möglichst niedrigen Druckverlust provozierend, gleichwohl - in Richtung der Hauptträgheitsachse z gesehen - möglichst kurz ausbilden zu können, ist nach einer weiteren Ausgestaltung der Erfindung ferner vorgesehen, daß der vorbezeichnete Ausdehnungskoeffizient b₅ in Abhängigkeit von deren Abstand z₅, normiert auf den Abstand z₁ der ersten Querschnittsfläche xy₁, eine Berechnungsvorschrift: ${b}_{5} = \left(\begin{matrix}47,2 & … & 47,8\end{matrix}\right) ⋅ {\left(\frac{{z}_{5}}{{z}_{1}}\right)}^{2} - \left(\begin{matrix}17,5 & … & 17,18\end{matrix}\right) ⋅ \left(\frac{{z}_{5}}{{z}_{1}}\right) + \left(\begin{matrix}2,2 & … & 2,4\end{matrix}\right)$, beispielsweise nämlich ${b}_{5} = 47,51 ⋅ {\left(\frac{{z}_{5}}{{z}_{1}}\right)}^{2} - 17,88 ⋅ \left(\frac{{z}_{5}}{{z}_{1}}\right) + 2,31$, erfüllt und/oder daß der vorbezeichnete Formkoeffizient n₃₅ in Abhängigkeit von deren Abstand z₅, normiert auf den Abstand z₁ der ersten Querschnittsfläche (xy₁), eine Berechnungsvorschrift: ${n}_{35} = \left(\begin{matrix}2,4 & … & 2,6\end{matrix}\right) ⋅ \left(\frac{{z}_{5}}{{z}_{1}}\right) + \left(\begin{matrix}7,7 & … & 8\end{matrix}\right)$, beispielsweise nämlich ${n}_{35} = 2,55 ⋅ \left(\frac{{z}_{5}}{{z}_{1}}\right) + 7,87$, erfüllt. Alternativ oder in Ergänzung ist nach einer weiteren Ausgestaltung der Erfindung vorgesehen, daß die Radien R₅(ϕ) der vorbezeichneten Querschnittsfläche xy₅ in Abhängigkeit vom jeweiligen Abstand z₅ zur Querschnittsfläche xy₃, einem oder mehreren der folgenden Koeffizientensätze **P₅** entsprechen:

| z₅ | a₅ | b₅ | m₁₅ | m₂₅ | n₁₅ | n₂₅ | n₃₅ |
|---|---|---|---|---|---|---|---|
| 0,1 | 1 | 1 | 4 | 4 | 2 | 2 | 2 |
| 0,12 | 1 | 0,9 | 4 | 4 | 3 | 3 | 2 |
| 0,13 | 0,98 | 0,8 | 4 | 4 | 3 | 3 | 3 |
| 0,14 | 0,98 | 0,75 | 4 | 4 | 3 | 3 | 3 |
| 0,15 | 0,98 | 0,7 | 4 | 4 | 3 | 3 | 3 |

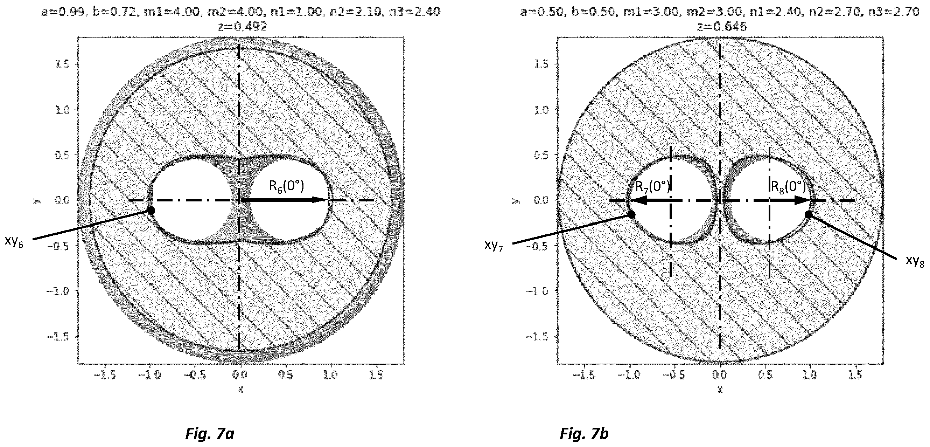

Nach einer weiteren Ausgestaltung der Erfindung weist das Lumen 10* - nicht zuletzt auch zwecks Bildung eines zwischen der superelliptischen Querschnittsfläche xy₄ des Lumens 10* und der vorbezeichneten Bifurkationsfläche mit möglichst geringem Druckverlust vermittelnden (zweiten) Übergangsbereichs - ferner eine sechste Querschnittsfläche xy₆ auf, die - wie auch in Fig. 7a gezeigt - mit ihrem geometrischen Schwerpunkt auf der Hauptträgheitsachse z liegt, nämlich in einem Abstand z₆ zur Querschnittsfläche xy₃, der mehr als 45% des Abstands z₁ (z₆ > 0,45 · z₁) und weniger als 60% des Abstands z₁ (z₆ < 0,6 · z₁) beträgt, und deren Radien R₆(ϕ) eine durch einen sechsten Koeffizientensatz **P₆** = [a₆ b₆ m₁₆ m₂₆ n₁₆ n₂₆ n₃₆] definierte sechste Berechnungsvorschrift f₆(ϕ, **P₆**) erfüllen, der mit a₆ = (0,98...1), bs = (0,7...0,8), m₁₆ = 4, m₂₆ = 4, n₁₆ = 1, n₂₆ = (2...2,5) und n₃₆ = (2,1...2,8) definiert ist; dies im besonderen in der Weise, daß deren dritter Formkoeffizient n₃₆ in Abhängigkeit vom Abstand z₆, normiert auf den Abstand z₁, eine Berechnungsvorschrift: ${n}_{36} = \left(\begin{matrix}3,4 & … & 3,6\end{matrix}\right) ⋅ \left(\frac{{z}_{6}}{{z}_{1}}\right) + \left(\begin{matrix}0,5 & … & 0,7\end{matrix}\right)$, beispielsweise nämlich ${n}_{36} = 3,57 ⋅ \left(\frac{{z}_{6}}{{z}_{1}}\right) + 0,64$, erfüllt. Alternativ oder in Ergänzung ist nach einer weiteren Ausgestaltung der Erfindung vorgesehen, daß die Radien R₆(ϕ) der vorbezeichneten Querschnittsfläche xy₆ in Abhängigkeit vom jeweiligen Abstand z₆ zur Querschnittsfläche xy₃, einem oder mehreren der folgenden Koeffizientensätze **P₆** entsprechen:

| z₆ | a₆ | b₆ | m₁₆ | m₂₆ | n₁₆ | n₂₆ | n₃₆ |
|---|---|---|---|---|---|---|---|
| 0.492 | 0.99 | 0.72 | 4 | 4 | 1 | 2.1 | 2.4 |
| 0.55 | 0.99 | 0.75 | 4 | 4 | 1 | 2.1 | 2.6 |

Nicht zuletzt auch zwecks Bildung eines zwischen der vorbezeichneten Bifurkationsfläche und der, ggf. kreisförmigen Querschnittsfläche xy₁ bzw. der, ggf. ebenfalls kreisförmigen Querschnittsfläche xy₂ jeweils vermittelnden Übergangsbereichs weist das Lumen 10* einer weiteren Ausgestaltung der Erfindung und wie auch in Fig. 7b angedeutet, ferner eine mit ihrem geometrischen Schwerpunkt von der Hauptträgheitsachse z entfernte, in einem Abstand z₇ zur dritten Querschnittsfläche xy₃, der mehr als 70% des Abstands z₁ (z₇>0,7 z₁) und weniger als 95% des Abstands z₁ (z₇<0,95 · z₁) beträgt, verortete siebte Querschnittsfläche xy₇ sowie eine mit ihrem geometrischen Schwerpunkt sowohl von der Hauptträgheitsachse z als auch dem geometrischen Schwerpunkt der vorbezeichneten Querschnittsfläche xy₇ entfernte, in einem Abstand z₈ zur dritten Querschnittsfläche xy₃, der gleich dem vorbezeichneten Abstand z₇ ist, verortete achte Querschnittsfläche xy₈ auf. Die Radien R₇(ϕ) der Querschnittsfläche xy₇ erfüllen eine durch einen siebten Koeffizientensatz **P₇** = [a₇ b₇ m₁₇ m₂₇ n₁₇ n₂₇ n₃₇] definierte siebte Berechnungsvorschrift f₅(ϕ, **P₇**) mit a₇ = (0,40...0,55), b₇ = a₇, m₁₇ = 3 m₂₇ = 3 n₁₇ = (2,7...2,8) n₂₇ = (2,3...2,5) und n₃₇ = n₂₇. Darüberhinaus ist vorgesehen, daß die Querschnittsfläche xy₈ - wie auch aus Fig. 7b ohne weiteres ersichtlich - kongruent zur Querschnittsfläche xy₇ ist, mithin daß die Radien R₈(ϕ) eine durch einen achten Koeffizientensatz **P₈** = [a₈ b₈ m₁₈ m₂₈ n₁₈ n₂₈ n₃₈ ] definierte achte Berechnungsvorschrift f₈(ϕ, **P₈**) mit a₈ = a₇, b₈ = b₇, m₁₈ = m₁₇, m₂₈ = m₂₇, n₁₈ = n₁₇, n₂₈ = n₂₇ und n₃₈ = n₃₇ erfüllen; dies im besonderen auch in der Weise, daß der geometrische Schwerpunkt der Querschnittsfläche xy₇ einen Abstand x₇ zur zweiten Symmetrieebene yz und der geometrische Schwerpunkt der Querschnittsfläche xy₈ einen Abstand x₈ zu nämlicher zweiten Symmetrieebene yz aufweist, und daß ein jeweiliger Betrag jedes der Abstände x₇, x₈ der Querschnittsflächen xy₇, xy₈ normiert auf den Radius R₇(0°) bzw. R₈(0°) der jeweiligen siebten bzw. achten Querschnittsfläche xy₇, xy₈ jeweils wenigstens gleich dem jeweiligen ersten Ausdehnungskoeffizienten a₇ bzw. a₈ der siebten bzw. achten Querschnittsfläche xy₇, xy₈ ist (x₇ / R₇(0°) ≥ a₇, x₈ / R₈(0°) ≥ a₈) und/oder jeweils höchstens einem 1 ,2-fachen des jeweiligen ersten Ausdehnungskoeffizienten a₇ bzw. a₈ der Querschnittsfläche xy₇, xy₈ entspricht (x₇ / R₇(0°) ≤ 1,2 · a₇, x₈ / R₈(0°) ≤ 1,2 · a₈). Nach einer weiteren Ausgestaltung der Erfindung ist ferner vorgesehen, daß die beiden Ausdehnungskoeffizienten a₇ und b₇ in Abhängigkeit vom gewählten Abstand z₇, normiert auf den Abstand z₁, eine Berechnungsvorschrift: ${a}_{7} = {b}_{7} = 309.5 {\left(\frac{{z}_{7}}{{z}_{1}}\right)}^{3} - 705 {\left(\frac{{z}_{7}}{{z}_{1}}\right)}^{2} + 524.3 \left(\frac{{z}_{7}}{{z}_{1}}\right) - 126$ erfüllen, und/oder daß die beiden Symmetriekoeffizienten m₁₇ und m₂₇ in Abhängigkeit vom gewählten Abstand z₇, normiert auf den Abstand z₁, eine Berechnungsvorschrift ${m}_{17} = {m}_{27} = - 205.4 {\left(\frac{{z}_{7}}{{z}_{1}}\right)}^{3} + 466.4 {\left(\frac{{z}_{7}}{{z}_{1}}\right)}^{2} - 345.3 \left(\frac{{z}_{7}}{{z}_{1}}\right) + 86.7$ erfüllen und/oder daß der Formkoeffizient n₁₇ in Abhängigkeit vom gewählten Abstand z₇, normiert auf den Abstand z₁, eine Berechnungsvorschrift: ${n}_{17} = - 1068 {\left(\frac{{z}_{7}}{{z}_{1}}\right)}^{3} + 2425.2 {\left(\frac{{z}_{7}}{{z}_{1}}\right)}^{2} - 1795.4 \left(\frac{{z}_{7}}{{z}_{1}}\right) + 433$ erfüllt, und/oder daß die Formkoeffizienten n₂₇ und n₃₇ in Abhängigkeit vom Abstand z₇, normiert auf den Abstand z₁, eine Berechnungsvorschrift: ${n}_{27} = {n}_{37} = 71.4 {\left(\frac{{z}_{7}}{{z}_{1}}\right)}^{3} - 159 {\left(\frac{{z}_{7}}{{z}_{1}}\right)}^{2} + 115 \left(\frac{{z}_{7}}{{z}_{1}}\right) - 24.4$ erfüllen.

Nach einer weiteren Ausgestaltung der Erfindung ist ferner vorgesehen, daß die Radien R_{B1,i}(ϕ) einer zwischen der vorbezeichneten Bifurkationsfläche xy_{B} und der vorbezeichneten Querschnittsfläche xy₇ verorteten neunten Querschnittsfläche xy_{B1,i} eine durch einen neunten Koeffizientensatz **P_{B1}** = [a_{B1} b_{B1} m_{B11} m_{B12} n_{B11} n_{B12} n_{B13} ] definierte neunte Berechnungsvorschrift f₉(ϕ, **P_{B1}**) mit a_{B1} = (1,7...1,8), b_{B1} = a_{B1}, m_{B11} = 3, m_{B12} = 3, n_{B11} = -2,4 n_{B12} = (2,7...2,8) und n_{B12} = n_{B13} erfüllen und daß die Radien R_{B2,i}(ϕ) von zwischen der vorbezeichneten Bifurkationsfläche xya und der vorbezeichneten Querschnittsfläche xy₈ verorteten zehnten Querschnittsfläche xy_{B2,i} eine durch einen zehnten Koeffizientensatz **P_{B2}** = [a_{B2} b_{B2} m_{B21} m_{B22} n_{B11} n_{B22} n_{B23}] definierte zehnte Berechnungsvorschrift f₁₀(ϕ, **P_{B2}**) mit **P_{B2}**= **P_{B1}** erfüllen; dies im besonderen in der Weise, daß die Radien R_{B1}(ϕ) vom jeweiligen Abstand zur Querschnittsfläche xy₃, mithin die Radien R_{B2}(ϕ) in Abhängigkeit vom jeweiligen Abstand z_{B2}, einem oder mehreren der folgenden Koeffizientensätze **P_{B1}** entsprechen:

| Z_{B1} | a_{B1} | b_{B1} | m_{B11} | m_{B12} | n_{B11} | n_{B12} | n_{B13} |
|---|---|---|---|---|---|---|---|
| 0,604 | 1,7 | 1,7 | 3 | 3 | -2,4 | 2,8 | 2,8 |
| 0,7 | 1,8 | 1,8 | 3 | 3 | -2,4 | 2,7 | 2,7 |

Nach einer weiteren Ausgestaltung der Erfindung ist der Strömungsteiler 10, wie bereits erwähnt, als Bestandteil eines dem Führen bzw. Transferieren eines strömenden Fluids, beispielsweise nämlich einer Flüssigkeit, einem Gas oder einer Dispersion, dienlichen Fluidleitungssystems ausgebildet bzw. in einem solchen Fluidleitungssystem verwendet. Das Fluidleitungssystem kann beispielsweise dafür vorgesehen bzw. eingerichtet sein, das - beispielsweise über ein angeschlossenes Zuleitungssegment einer Rohrleitung - herangeführte Fluid in zwei Teilströme aufzuteilen und diese in einer Durchströmungsrichtung des Fluidleitungssystem weiter entlang zweier paralleler Strömungspfade zu führen. Alternativ oder in Ergänzung kann das vorbezeichnete Fluidleitungssystem auch dafür eingerichtet sein, zwei entlang zweier paralleler Strömungspfade geführte Teilströme zu einem gemeinsamen Fluidstrom zusammenzuführen und diesenbeispielsweise an ein angeschlossenes Ableitungssegment einer Rohrleitung - abzugeben. Dafür weist das Fluidleitungssystem gemäß einer weiteren Ausgestaltung der Erfindung, wie auch in Fig. 3a bzw. 3b dargestellt, außer dem Strömungsteiler 10 eine - beispielsweise als starres und/oder zumindest abschnittsweise kreiszylindrisches Rohr ausgebildete - erste Fluidleitung 100 mit einem von einer Wandung, beispielsweise aus einem Metall, umhüllten, sich von einem ersten Leitungsende 100+ nämlicher Fluidleitung 100 bis zu einem - hier nicht dargestellten - zweiten Leitungsende nämlicher Fluidleitung 100 erstreckenden Lumen 100* sowie wenigstens eine - beispielsweise als starres und/oder zumindest abschnittsweise kreiszylindrisches Rohr ausgebildete und/oder zur Fluidleitung 100 baugleiche - zweite Fluidleitung 200 mit einem von einer Wandung, beispielsweise aus einem Metall, umhüllten, sich von einem ersten Leitungsende 200+ nämlicher Fluidleitung 200 bis zu einer in einem zweiten Leitungsende 200# nämlicher Fluidleitung 200 erstreckenden Lumen 200* auf. Nach einer weiteren Ausgestaltung der Erfindung besteht die Wandung der Fluidleitung 100 aus dem gleichen Material wie die Wandung der Fluidleitung 200 und/oder bestehen die Wandungen der ersten und zweiten Fluidleitungen 100, 200 aus dem gleichen Material wie die Wandung des Strömungsteilers 10. Alternativ oder in Ergänzung ist ferner vorgesehen, daß die Wandung der Fluidleitung 100 und/oder die Wandung der Fluidleitung 200 jeweils aus einem rostfreien Stahl, beispielsweise einem Edelstahl, insb. AISI (*American Iron and Steel Institute*) 304, AISI 304L, AISI 316L, WNr. (Werkstoffnumer) 1.4401, WNr. 1.4404 oder UNS (*Unified Numbering System for Metals and Alloys) S31603,* einem Duplexstahl, einem Superduplexstahl, insb. WNr. 1.4410 oder WNr. 14501, einer Nickel-Molybdän-Legierung, insb. Hastelloy B, einer Nickel-Molybdän-Chrom-Legierung, insb. Hastelloy C bzw. Hastelloy C-22, besteht.

Wie in Fig. 3b dargestellt bzw. aus einer Zusammenschau der Fig. 3b und 3a ohne weiteres ersichtlich, kann beim vorbezeichneten Fluidleitungssystem sowohl die Fluidleitung 100 mit deren Leitungsende 100+ als auch die Fluidleitung 200 mit deren Leitungsende 200+ jeweils mit dem Strömungsteilerende 10+ des Strömungsteilers 10 verbunden sein, derart, daß das Lumen 100* der Fluidleitung 100 unter Bildung eines durch die Strömungsteileröffnung 10a des Strömungsteilers 10 hindurchführenden Strömungspfades und das Lumen 200* der Fluidleitung 200 unter Bildung eines durch die Strömungsteileröffnung 10b des Strömungsteilers 10 hindurchführenden Strömungspfades jeweils mit dem Lumen 10* des Strömungsteilers 10 kommunizieren.

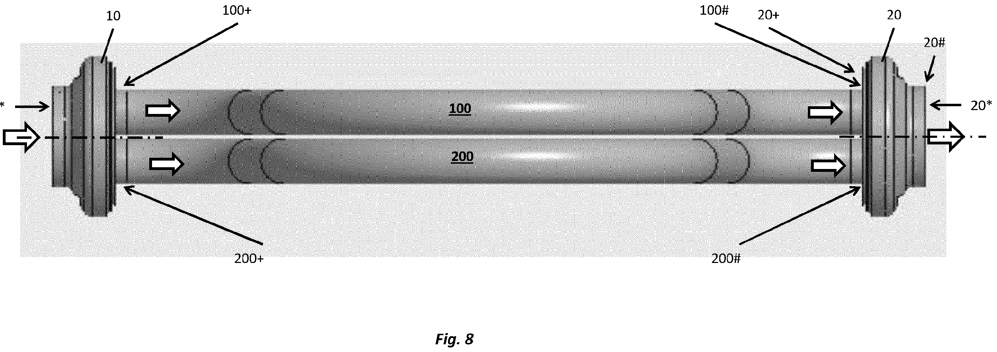

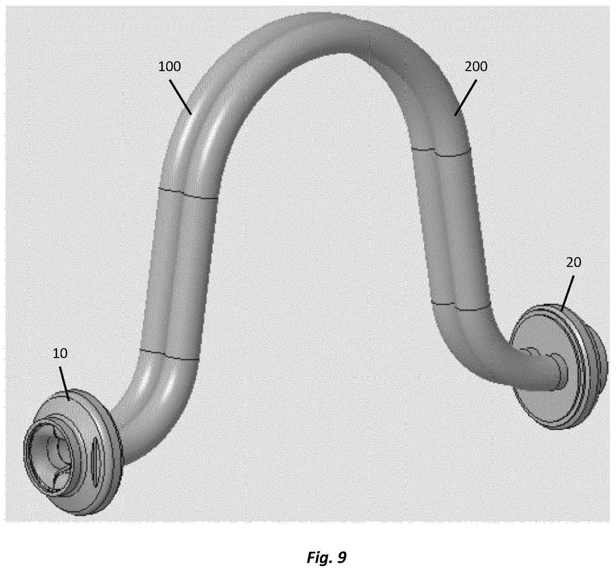

Nach einer weiteren Ausgestaltung der Erfindung umfaßt das vorbezeichnete Fluidleitungssystem, wie auch in Fig. 8 und 9 schematisch dargestellt, ferner einen dem (ersten) Strömungsteiler 10 entsprechenden, nämlich ein von einer Wandung umhülltes, sich sowohl von einer in einem ersten Strömungsteilerende 20+ verorteten ersten Strömungsteileröffnung 20a als auch von einer im Strömungsteilerende 20+ verorteten, von der Strömungsteileröffnung 20a beabstandeten zweiten Strömungsteileröffnung 20b bis zu einer in einem zweiten Strömungsteilerende 20# verorteten kreisförmigen dritten Strömungsteileröffnung 10c erstreckenden Lumen 20* aufweisenden weiteren (zweiten) Strömungsteiler 20, der ebenfalls mit den beiden vorbezeichneten Fluidleitungen 100, 200 verbunden ist; dies im besonderen in der Weise, daß, wie auch wie auch aus Fig. 8 bzw. 9 ohne weiteres ersichtlich, sowohl die Fluidleitung 100 mit deren Leitungsende 100# als auch die Fluidleitung 200 mit deren Leitungsende 200# jeweils mit dem ersten Strömungsteilerende 20+ des Strömungsteilers 20 verbunden ist, derart, daß das Lumen 100* der Fluidleitung 100 unter Bildung eines sowohl durch die Strömungsteileröffnung 10a des Strömungsteilers 10 als auch durch eine erste Strömungsteileröffnung des Strömungsteilers 20 hindurchführenden ersten Strömungspfades und das Lumen 200* der Fluidleitung 200 unter Bildung eines sowohl durch die Strömungsteileröffnung 10b des Strömungsteilers 10 als auch durch eine zweite Strömungsteileröffnung des Strömungsteilers 20 hindurchführenden, zum vorbezeichneten ersten Strömungspfad strömungstechnisch parallel geschalteten zweiten Strömungspfades sowohl mit dem Lumen 10* des Strömungsteilers 10 als auch mit dem Lumen 20* des zweiten Strömungsteilers 20 kommunizieren. Nach einer weiteren Ausgestaltung der Erfindung ist der Strömungsteiler 20 zum Strömungsteiler 10 baugleich bzw. identisch ausgebildet.

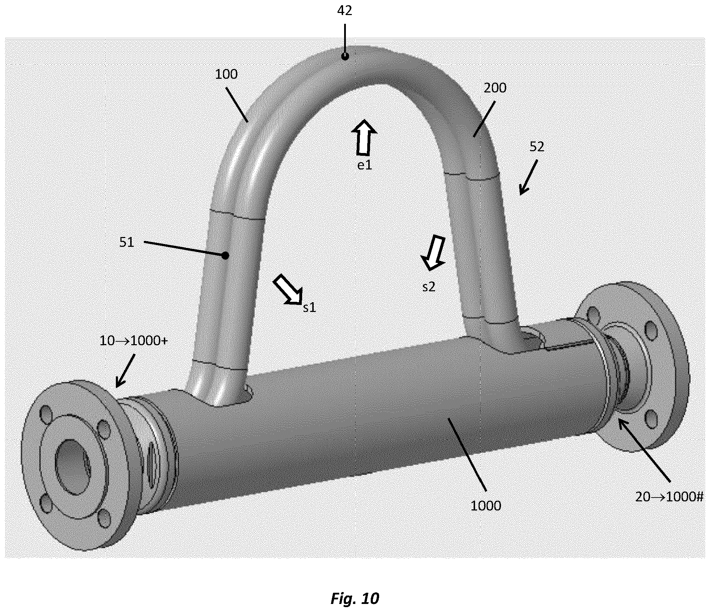

Für den vorbezeichneten Fall, daß das Fluidleitungssystem Bestandteil eines Meßwandlers bzw. eines damit gebildeten Meßsystems ist, weist das Fluidleitungssystem gemäß einer weiteren Ausgestaltung der Erfindung ferner eine Sensoranordnung auf, die eingerichtet ist, wenigstens ein die wenigstens eine Meßgröße repräsentierendes, beispielsweise nämlich elektrisches und/oder analoges, Meßsignal s1 bereitzustellen; dies im besonderen in der Weise, daß das Meßsignal s1 wenigstens einen Signalparameter aufweist, der Meßgröße abhängig ist, nämlich auf Änderungen der Meßgröße mit einer entsprechenden Änderung folgt. Als ein von der Meßgröße abhängiger Signalparameter wiederum kann beispielsweise ein von der wenigstens einen Meßgröße abhängiger Signalpegel, eine von nämlicher Meßgröße abhängige Signalfrequenz und/oder ein von nämlicher Meßgröße abhängiger Phasenwinkel des Meßsignals dienen. Die Sensoranordnung kann, wie in Fig. 10 angedeutet, außerhalb der Fluidleitungen 100, 200 gleichwohl in deren Nähe plaziert sein, beispielsweise auch derart, daß die Sensoranordnung zumindest an einer der Fluidleitungen 100, 200 angebracht ist. Nach einer weiteren Ausgestaltung der Erfindung ist die Sensoranordnung ferner eingerichtet, mechanische Schwingungen wenigsten einer der beiden vorbezeichneten Fluidleitungen 100, 200, beispielsweise nämlich Biegeschwingungen der Fluidleitung 100 und/oder der Fluidleitung 200 auf einer oder mehreren dem Fluidleitungssystem innewohnenden Resonanzfrequenzen, zu erfassen und wenigstens ein Schwingungen wenigstens einer der Fluidleitungen repräsentierendes bzw. als Meßsignal dienliches Schwingungssignal bereitzustellen. Die Sensoranordnung kann dafür beispielsweise einen elektrodynamischen und/oder Schwingungsbewegungen der beiden Fluidleitungen 100, 200 differenziell erfassenden Schwingungssensor 51 aufweisen.

Gemäß einer weiteren Ausgestaltung weist das Fluidleitungssystem zudem eine elektro-mechanische Erregeranordnung auf, die eingerichtet ist, elektrische Leistung in mechanische Schwingungen der Fluidleitungen, beispielsweise nämlich die vorbezeichneten Biegeschwingungen der Fluidleitung 100 und/oder der Fluidleitung 200, bewirkende mechanische Leistung zu wandeln. Nämliche Erregeranordnung kann beispielsweise mittels wenigstens eines elektrodynamischen und/oder differenziell auf die beiden Fluidleitungen 100, 200 einwirkenden Schwingungserreger 41 gebildet sein. Nicht zuletzt für den erwähnten Fall, daß das Fluidleitungssystem dafür vorgesehen ist, basierend auf im strömenden Fluid generierten Corioliskräften eine Massenstrom zu messen, kann die Sensoranordnung bzw. das damit gebildete Fluidleitungssystem, wie auch in Fig. 10 angedeutet, zusätzlich zum Schwingungssensor 51 zudem auch wenigstens einen zweiten Schwingungssensor 52 zum Erzeugen wenigstens eines mit der Meßgröße korrespondierenden - insb. elektrischen und/oder analogen - als zweites Meßsignal s2 dienlichen zweiten Schwingungsmeßsignals aufweisen. Nämlicher Schwingungssensor 52 kann baugleich wie der Schwingungssensor 51 und/oder und in gleichem Abstand wie der Schwingungssensor 51 von der Fluidleitung 100 bzw. den Fluidleitungen 100, 200 entfernt positioniert sein. Alternativ oder in Ergänzung können die Schwingungssensoren 51, 52 symmetrisch bezüglich des vorbezeichneten Schwingungserregers 41 positioniert sein, beispielsweise auch derart, daß, wie in Fig. 10 angedeutet und wie bei vibronischen Meßwandlern durchaus üblich, der Schwingungssensor 52 vom Strömungsteiler 10 weiter entfernt ist als der Schwingungssensor 51 bzw. umgekehrt der Schwingungssensor 51 vom Strömungsteiler 20 weiter entfernt ist als der Schwingungssensor 52 und/oder derart, daß der Schwingungssensor 51 gleichweit vom Strömungsteiler 10 entfernt ist wie der Schwingungssensor 52 vom Strömungsteiler 20.

Zwecks Verarbeitung bzw. Auswertung des wenigstens einen Meßsignals s1 bzw. der Meßsignale s1, s2 kann ein mittels des vorbezeichneten Fluidleitungssystems gebildetes Meßsystem ferner eine mit der Sensoranordnung elektrisch gekoppelte, beispielsweise mittels wenigstens eines Mikroprozessors und/oder eines digitalen Signalprozessors (DSP) gebildete, Meßund Betriebselektronik umfassen, die in vorteilhafter Weise wiederum in einem in ausreichendem Maße staub- und wasserdichten bzw. schlag- und explosionsfesten Schutzgehäuse 5000 untergebracht sein kann. Im besonderen kann eine solche Meß- und Betriebselektronik ferner dafür eingerichtet sein, das wenigstens eines Meßsignal s1 bzw. die Meßsignale s1, s2 zu verarbeiten, beispielsweise nämlich mittels des Meßsignals s1 und/oder des Meßsignals s2 Meßwerte für die wenigstens eine Meßgröße zu ermitteln. Für den vorbezeichneten Fall, daß das Fluidleitungssystem mit wenigstens einem Schwingungserreger 41 ausgerüstet ist, kann die Meß- und Betriebselektronik 500 zudem mit nämlichem Schwingungserreger 41 elektrisch gekoppelt und zudem dafür eingerichtet sein, ein elektrische Anregungssignal e1 in den vorbezeichneten Schwingungserreger 41 einzuspeisen, und kann der Schwingungserreger 41 zudem dafür eingerichtet sein, mittels des Anregungssignals e1 eingespeiste elektrische Leistung in mechanische Schwingungen zumindest der Fluidleitung 100 bzw. in mechanische Schwingungen sowohl der Fluidleitung 100 als auch der Fluidleitung 200 bewirkende mechanische Leistung zu wandeln.

Wie in Fig. 10 angedeutet, kann das Fluidleitungssystem, nicht zuletzt auch bei desen Verwendung in einem Meßsystem, ferner ein Schutzgehäuse 1000 für die Fluidleitungen 100, 200 umfassen. Das in Fig. 10 gezeigte Schutzgehäuse 1000 weist eine von einer Wandung umhüllte Kavität auf, innerhalb der die Fluidleitung 100 und zumindest die Fluidleitung 200 plaziert sind. Nicht zuletzt zwecks Bildung eines in ausreichendem Maße verwindungs- und biegesteifen bzw. schlag- und druckfesten Schutzgehäuses kann dessen Wandung beispielsweise aus einem Metall, etwa einem Edelstahl, hergestellt und/oder, wie durchaus üblich und in Fig. 10 angedeutet, zumindest teilweise hohlzylindrisch ausgebildet sein. Wie in ferner Fig. 10 angedeutet, kann zudem ein erstes Gehäuseende 1000+ des Schutzgehäuses 1000 mittels des Strömungsteiler 10 gebildet sein, etwa derart, daß der Strömungsteiler 10 integraler Bestandteil des Schutzgehäuses ist und/oder daß das Schutzgehäuse 1000 eine die vorbezeichnete Kavität seitlich begrenzende Seitenwand aufweist, die seitlich am Strömungsteiler 10 fixiert bzw. stoffschlüssig mit diesem verbunden ist. Darüberhinaus kann zudem auch ein zweites Gehäuseende 1000# nämlichen Schutzgehäuses 1000 mittels des Strömungsteilers 20 gebildet sein, beispielsweise auch so, daß sowohl der Strömungsteiler 10 als auch der Strömungsteiler 20 jeweils integraler Bestandteil des Schutzgehäuses ist bzw. daß das Schutzgehäuse 1000 eine die Kavität seitlich begrenzende Seitenwand aufweist, die seitlich sowohl am Strömungsteiler 10 als auch am Strömungsteiler 20 fixiert bzw. stoffschlüssig mit der der ersten Fluidleitung verbunden ist.

## Patentansprüche

1. Strömungsteiler, insb. als Leitungsverzweigung oder als Leitungsvereinigung dienlicher Strömungsteiler, zum Verbinden von dem Führen eines strömenden Fluids dienlichen Fluidleitungen, welcher Strömungsteiler ein von einer Wandung, insb. aus einem Metall, umhülltes, sich sowohl von einer in einem ersten Strömungsteilerende (10+) verorteten, insb. kreisförmigen, ersten Strömungsteileröffnung (10a) als auch von einer von nämlicher ersten Strömungsteileröffnung (10a) beabstandet im ersten Strömungsteilerende (10+) verorteten, insb. kreisförmigen, zweiten Strömungsteileröffnung (10b) bis zu einer in einem, insb. von einem Anschlußflansch gefaßten, zweiten Strömungsteilerende (10#) verorteten, insb. kreisförmigen, dritten Strömungsteileröffnung (10c) erstreckendes Lumen (10*) umfaßt;
- wobei das Lumen (10*)
-- eine die ersten und zweiten Strömungsteilerenden (10+, 10#) imaginär verbindende Hauptträgheitsachse (z)
-- sowie eine erste Symmetrieebene (xz) und eine dazu senkrechte zweite Symmetrieebene (yz) aufweist, welche ersten und zweiten Symmetrieebenen einander in der Hauptträgheitsachse (z) imaginär schneiden;
- und wobei das Lumen (10*) zur Hauptträgheitsachse (z) senkrechte, ebene Querschnittsflächen (xyᵢ) mit jeweils einem in der ersten Symmetrieebene (xz) verorteten geometrischen Schwerpunkt aufweist,
-- von denen
--- eine im ersten Strömungsteilerende (10+) verortete, mit deren geometrischen Schwerpunkt von der Hauptträgheitsachse (z) des Lumens (10*) entfernte erste Querschnittsfläche (xy₁) der ersten Strömungsteileröffnung (10a) des Strömungsteilers (10),
--- eine ebenfalls im ersten Strömungsteilerende (10+) verortete, mit deren geometrischen Schwerpunkt sowohl von der Hauptträgheitsachse (z) des Lumens (10*) als auch vom geometrischen Schwerpunkt der ersten Querschnittsfläche (xy₁) entfernte zweite Querschnittsfläche (xy₂) der zweiten Strömungsteileröffnung (10b) des Strömungsteilers (10)
--- und eine im zweiten Strömungsteilerende (10#) verortete, mit deren geometrischen Schwerpunkt auf der Hauptträgheitsachse (z) des Lumens (10*) liegende dritte Querschnittsfläche (xy₃) der dritten Strömungsteileröffnung (10c) des Strömungsteilers (10) entspricht;
- wobei die ersten und zweiten Querschnittsflächen des Lumens jeweils einen Abstand zᵢ zur dritten Querschnittsfläche (xy₃), gemessen als ein Abstand einer Projektion des geometrischen Schwerpunkts der jeweiligen der Querschnittsflächen (xyᵢ) auf die Hauptträgheitsachse (z) zum geometrischen Schwerpunkt der dritten Querschnittsfläche (xy₃), aufweisen
- und wobei jede der Querschnittsflächen (xyᵢ) des Lumens sich jeweils vom jeweiligen geometrischen Schwerpunkt bis zur Wandung erstreckende und jeweils in einem Winkel ϕ (-180°≤ ϕ ≤ 180°) zu einer jeweiligen Bezugsachse (xᵢ), nämlich einer sowohl in der jeweiligen Querschnittsfläche (xyᵢ) als auch in der ersten Symmetrieebene des Lumens (10*) liegenden und zudem senkrecht auf dessen Hauptträgheitsachse (z) stehenden gedachten Achse stehende Radien (Rᵢ) aufweist;
- wobei jeder in einem Winkel ϕ = 0° zur jeweiligen Bezugsachse (xᵢ) stehende Radius Rᵢ(0°) von der zweite Symmetrieebene (yz) wegweist,
- **dadurch gekennzeichnet, dass** jeder Radius Ri(cp) einer jeden Querschnittsfläche (xyᵢ) jeweils eine durch einen der jeweiligen Querschnittsfläche (xyᵢ) zugewiesenen und durch einen jeweils sieben Koeffizienten, nämlich jeweils
-- einen ersten Ausdehnungskoeffizienten aᵢ,
-- einen zweiten Ausdehnungskoeffizienten bᵢ,
-- einen ersten Symmetriekoeffizienten m₁ᵢ,
-- einen zweiten Symmetriekoeffizienten m₂ᵢ,
-- einen ersten Formkoeffizienten n₁ᵢ,
-- einen zweiten Formkoeffizienten n₂ᵢ
-- und einen dritten Formkoeffizienten n₃ᵢ enthaltenden Koeffizientensatz **Pᵢ** (**Pᵢ** = [aᵢ bᵢ m₁ᵢ m₂ᵢ n₁ᵢ n₂ᵢ n₃ᵢ]) definierte und jeweils mit einem größten Radius R₀ der dritten Querschnittsfläche (xy₃) skalierte Berechnungsvorschrift fᵢ(ϕ, **Pᵢ**): $\begin{matrix}{R}_{i} \left(φ\right) = {R}_{0} ⋅ {r}_{i} \left(φ\right) = {f}_{i} \left(φ, {P}_{i}\right) = {f}_{i} \left(φ, \left[\begin{matrix}{a}_{i} & {b}_{i} & {m}_{1 i} & {m}_{2 i} & {n}_{1 i} & {n}_{2 i} & {n}_{3 i}\end{matrix}\right]\right) \\ = {R}_{0} ⋅ \sqrt[- {n}_{1 i}]{{\left|\frac{1}{{a}_{i}}cos\left(\frac{{m}_{1 i}}{4}φ\right)\right|}^{{n}_{2 i}} + {\left|\frac{1}{{b}_{i}}sin\left(\frac{{m}_{2 i}}{4}φ\right)\right|}^{{n}_{3 i}}}\end{matrix}$ erfüllt, derart,
-- daß die Radien R₁(ϕ) der ersten Querschnittsfläche (xy₁) des Lumens (10*) eine durch einen ersten Koeffizientensatz P₁ = [a₁ b₁ m₁₁ m₂₁ n₁₁ n₂₁ n₃₁] definierte erste Berechnungsvorschrift f₁(ϕ, **P₁**) mit a₁ = (0,4...0,5), b₁ = (0,4...0,5), insb. b₁ = a₁, m₁₁ = 4, m₂₁ = 4, n₁₁ = (2...3), insb. n₁₁ = 2,8, n₂₁ = (2...3), insb. n₂₁ = 2,2 und n₃₁ = (2...3), insb. n₃₁ = 2,2, erfüllen,
-- daß die Radien R₂(ϕ) der zweiten Querschnittsfläche (xy₂) des Lumens (10*) eine durch einen zweiten Koeffizientensatz P₂ = [a₂ b₂ m₁₂ m₂₂ n₁₂ n₂₂ n₃₂] definierte zweite Berechnungsvorschrift f₂(ϕ, **P₂**) mit a₂ = a₁, b₂ = b₁, m₁₂ = m₁₁, m₂₂ = m₂₁, n₁₂ = n₁₁, n₂₂ = n₂₁ und n₃₂ = n₃₁ erfüllen,
-- daß die Radien R₃(ϕ) der dritten Querschnittsfläche (xy₃) des Lumens (10*) eine durch einen dritten Koeffizientensatz P₃ = [a₃ b₃ m₁₃ m₂₃ n₁₃ n₂₃ n₃₃] definierte dritte Berechnungsvorschrift f₃(ϕ, **P₃**) mit a₃ = 1, b₃ = a₃, m₁₃ = 4, m₂₃ = m₁₃, n₁₃ = 2.0, n₂₃ = n₁₃ und n₃₃ = n₁₃ erfüllen,
- und daß die Radien R₄(ϕ) einer mit deren geometrischen Schwerpunkt auf der Hauptträgheitsachse (z) des Lumens (10*) liegende, in einem Abstand z₄ zur dritten Querschnittsfläche (xy₃), der mehr als 20% des Abstands z₁ (z₄ > 0,2 · z₁) und weniger als 45% des Abstands z₁ (z₄< 0,45 · z₁) beträgt, verorteten vierten Querschnittsfläche (xy₄) des Lumens (10*) eine durch einen vierten Koeffizientensatz P₄ = [a₄ b₄ m₁₄ m₂₄ n₁₄ n₂₄ n₃₄] definierte vierte Berechnungsvorschrift f₄(ϕ, **P₄**) mit a₄ =(0,95...1), b₄ = (0,45...0,7), m₁₄ = 4, m₂₄ = 4, n₁₄ = 3.0, n₂₄ = n₁₄ und n₃₄ = (3...4) erfüllen.

2. Strömungsteiler nach dem vorherigen Anspruch, wobei die Radien R₅(ϕ) einer mit deren geometrischen Schwerpunkt auf der Hauptträgheitsachse (z) des Lumens (10*) liegende, in einem Abstand z₅ zur dritten Querschnittsfläche (xy₃), der nicht weniger als 10% des Abstands z₁ (z₅≥ 0,1 · z₁) und nicht mehr als 20% des Abstands z₁ (z₅ ≤ 0,2 · z₁) beträgt, verorteten fünften Querschnittsfläche (xy₅) des Lumens (10*) eine durch einen fünften Koeffizientensatz P₅ = [a₅ b₅ m₁₅ m₂₅ n₁₅ n₂₅ n₃₅] definierte fünften Berechnungsvorschrift f₅(ϕ, **P₅**) mit a₅ = (0,97...1), b₅ = (0,65...1), m₁₅ = 4, m₂₅ = 4, n₁₅ = 3, n₂₅ = 3 und n₃₅ = (2...3,5) erfüllen.

3. Strömungsteiler nach dem vorherigen Anspruch,
- wobei die fünfte Querschnittsfläche (xy₅) so ausgebildet ist, daß deren zweiter Ausdehnungskoeffizient b₅ in Abhängigkeit von deren Abstand z₅, normiert auf den Abstand z₁ der ersten Querschnittsfläche (xy₁), eine Berechnungsvorschrift:
${b}_{5} = \left(\begin{matrix}47,2 & … & 47,8\end{matrix}\right) ⋅ {\left(\frac{{z}_{5}}{{z}_{1}}\right)}^{2} - \left(\begin{matrix}17,5 & … & 17,18\end{matrix}\right) ⋅ \left(\frac{{z}_{5}}{{z}_{1}}\right) + \left(\begin{matrix}2,2 & … & 2,4\end{matrix}\right)$, insb. nämlich ${b}_{5} = 47,51 ⋅ {\left(\frac{{z}_{5}}{{z}_{1}}\right)}^{2} - 17,88 ⋅ \left(\frac{{z}_{5}}{{z}_{1}}\right) + 2,31$, erfüllt; und/oder
- wobei die fünfte Querschnittsfläche (xy₅) so ausgebildet ist, daß deren dritter Formkoeffizient n₃₅ in Abhängigkeit von deren Abstand z₅, normiert auf den Abstand z₁ der ersten Querschnittsfläche (xy₁), eine Berechnungsvorschrift:
${n}_{35} = \left(2,4 … 2,6\right) ⋅ \left(\frac{{z}_{5}}{{z}_{1}}\right) + \left(7,7 … 8\right)$, insb. nämlich ${n}_{35} = 2,55 ⋅ \left(\frac{{z}_{5}}{{z}_{1}}\right) + 7,87$, erfüllt; und/oder
- wobei die fünfte Querschnittsfläche so ausgebildet ist, daß ein Verhältnis n₃₅ / b₅ von deren dritten Formkoeffizienten n₃₅ zu deren zweiten Ausdehnungskoeffizienten b₅ mehr als 2 und/oder weniger als 6 beträgt.

4. Strömungsteiler nach einem der vorherigen Ansprüche,
- wobei von keiner der Querschnittsflächen (xyᵢ) des Lumens (10*) der jeweilige dritte Formkoeffizient n₃ᵢ größer als der dritte Formkoeffizient n₃₄ der vierten Querschnittsfläche (xy₄) ist; und/oder
- wobei die vierte Querschnittsfläche so ausgebildet ist, daß ein Verhältnis n₃₄ / b₄ von deren dritten Formkoeffizienten n₃₄ zu deren zweiten Ausdehnungskoeffizienten b₄ nicht weniger als 5,5 und/oder nicht mehr als 7 beträgt; und/oder
- wobei von jeder der Querschnittsflächen (xyᵢ) des Lumens (10*) der jeweilige erste Ausdehnungskoeffizient aᵢ nicht weniger als 0,9 und/oder nicht mehr als 1 beträgt; und/oder
- wobei von jeder der Querschnittsflächen (xyᵢ) des Lumens (10*) der jeweilige zweite Ausdehnungskoeffizient bᵢ nicht weniger als 0,4 und/oder nicht mehr als 1 beträgt; und/oder
- wobei von jeder der Querschnittsflächen (xyᵢ) des Lumens (10*) der jeweilige erste Formkoeffizienten n₁ᵢ nicht weniger als 2 und/oder nicht mehr als 3 beträgt; und/oder
- wobei von jeder der Querschnittsflächen (xyᵢ) des Lumens (10*) der jeweilige zweite Formkoeffizienten n₂ᵢ nicht weniger als 2 und/oder nicht mehr als 3 beträgt; und/oder
- wobei keiner der ersten Ausdehnungskoeffizienten aᵢ eines der Koeffizientensätze Pᵢ größer ist als der erste Ausdehnungskoeffizient a₁ des ersten Koeffizientensatzes P₁; und/oder
- wobei keiner der zweiten Ausdehnungskoeffizienten bᵢ eines der Koeffizientensätze Pᵢ größer ist als der zweite Ausdehnungskoeffizient b₁ des ersten Koeffizientensatzes P₁; und/oder
- wobei keine Querschnittsfläche (xyᵢ) einen Flächeninhalt aufweist, der größer als ein Flächeninhalt der dritten Querschnittsfläche (xy₃) ist; und/oder
- wobei keine Querschnittsfläche (xyᵢ) einen Flächeninhalt aufweist, der kleiner als ein Flächeninhalt der ersten Querschnittsfläche (xy₁) oder der zweiten Querschnittsfläche (xy₂) ist; und/oder
- wobei ein Verhältnis eines Flächeninhalts der dritten Querschnittsfläche (xy₁) zu einem Flächeninhalt der ersten Querschnittsfläche (xy₁) oder der zweiten Querschnittsfläche (xy₂) jeweils größer als 1 und/oder kleiner als 1,5 ist; und/oder
- wobei der Abstand z₁ der ersten Querschnittsfläche (xy₁) zur dritten Querschnittsfläche (xy₃) gleich dem Abstand z₂ (z₂ = z₁) der zweiten Querschnittsfläche (xy₂) zur dritten Querschnittsfläche (xy₃) ist; und/oder
- wobei der Abstand z₁ der ersten Querschnittsfläche (xy₁) zur dritten Querschnittsfläche (xy₃) und/oder der Abstand z₂ (z₂ = z₁) der zweiten Querschnittsfläche (xy₂) zur dritten Querschnittsfläche (xy₃) einer Länge L des Lumens (10*) entspricht.

5. Strömungsteiler nach einem der vorherigen Ansprüche, wobei die Radien R₆(ϕ) einer mit deren geometrischen Schwerpunkt auf der Hauptträgheitsachse (z) des Lumens (10*) liegende, in einem Abstand z₆ zur dritten Querschnittsfläche (xy₃), der mehr als 45% des Abstands z₁ (z₆ > 0,45 · z₁) und weniger als 60% des Abstands z₁ (z₆ < 0,6 · z₁) beträgt, verorteten sechsten Querschnittsfläche (xy₆) des Lumens (10*) eine durch einen sechsten Koeffizientensatz P₆ = [a₆ b₆ m₁₆ m₂₆ n₁₆ n₂₆ n₃₆] definierte sechsten Berechnungsvorschrift f₆(ϕ, **P₆**) mit a₆ = (0,98...1), b₆ = (0,7...0,8), m₁₆ = 4, m₂₆ = 4, n₁₆ = 1, n₂₆= (2...2,5) und n₃₆ = (2,1...2,8) erfüllt.

6. Strömungsteiler nach dem vorherigen Anspruch, wobei die sechste Querschnittsfläche so ausgebildet ist, daß deren dritter Formkoeffizient n₃₆ in Abhängigkeit von deren Abstand z₆, normiert auf den Abstand z₁ der ersten Querschnittsfläche (xy₁), eine Berechnungsvorschrift: ${n}_{36} = \left(3,4 … 3,6\right) ⋅ \left(\frac{{z}_{6}}{{z}_{1}}\right) + \left(0,5 … 0,7\right)$, insb. nämlich ${n}_{36} = 3,57 ⋅ \left(\frac{{z}_{6}}{{z}_{1}}\right) + 0,64$, erfüllt.

7. Strömungsteiler nach einem der vorherigen Ansprüche,
- wobei die Radien R₇(ϕ) einer mit deren geometrischen Schwerpunkt von der Hauptträgheitsachse (z) des Lumens (10*) entfernten und in einem Abstand z, zur dritten Querschnittsfläche (xy₃), der mehr als 70% des Abstands z₁ (z₇ > 0,7 · z₁) und weniger als 95% des Abstands z₁ (z₇ < 0,95 · z₁) beträgt, verorteten siebten Querschnittsfläche (xy₇) des Lumens (10*) eine durch einen siebten Koeffizientensatz P₇ = [a₇ b₇ m₁₇ m₂₇ n₁₇ n₂₇ n₃₇] definierte siebte Berechnungsvorschrift f₇(ϕ, **P₇**) mit a₇ = (0,40...0,55), b₇ = a₇,
m₁₇ = (3...4) m₂₇ = (3...4) n₁₇ = (2,7...2,8) n₂₇ = (2,3...2,5) und n₃₇ = n₂₇ erfüllen,
- und wobei die Radien R₈(ϕ) einer mit deren geometrischen Schwerpunkt von der Hauptträgheitsachse (z) des Lumens (10*) entfernten und in einem Abstand z₈ zur dritten Querschnittsfläche (xy₃), der gleich dem Abstand z₇ der siebten Querschnittsfläche ist, verorteten achten Querschnittsfläche (xy₈) des Lumens (10*) eine durch einen achten Koeffizientensatz P₈ = [a₈ b₈ m₁₈ m₂₈ n₁₃ n₂₈ n₃₈] definierte achte Berechnungsvorschrift f₈(ϕ, **P₈**) mit a₈ = a₇, b₈ = b₇, m₁₃ = m₁₇, m₂₈ = m₂₇, n₁₃ = n₁₇, n₂₈ = n₂₇ und n₃₈ = n₃₇ erfüllen.

8. Strömungsteiler nach dem vorherigen Anspruch,
- wobei der geometrische Schwerpunkt der siebten Querschnittsfläche (xy₇) des Lumens einen Abstand x₇ zur zweiten Symmetrieebene (yz) und der geometrische Schwerpunkt der achten Querschnittsfläche (xy₈) des Lumens einen Abstand x₈ zur zweiten Symmetrieebene (yz) aufweist,
- und wobei ein jeweiliger Betrag jedes der Abstände x₇, x₈ der siebten und achten Querschnittsflächen (xy₇, xy₈) normiert auf den Radius R₇(0°) bzw. R₈(0°) der jeweiligen siebten bzw. achten Querschnittsfläche (xy₇, xy₈) jeweils wenigstens gleich dem jeweiligen ersten Ausdehnungskoeffizienten a₇ bzw. a₈ der siebten bzw. achten Querschnittsfläche (xy₇, xy₈) ist und/oder jeweils höchstens einem 1,2-fachen des jeweiligen ersten Ausdehnungskoeffizienten a₇ bzw. a₈ entspricht.

9. Strömungsteiler nach einem der vorherigen Ansprüche,
- wobei der geometrische Schwerpunkt der ersten Querschnittsfläche (xy₁) des Lumens einen Abstand x₁ zur zweiten Symmetrieebene (yz) und der geometrische Schwerpunkt der zweiten Querschnittsfläche (xy₂) des Lumens einen Abstand x₂ zur zweiten Symmetrieebene (yz) aufweist,
- und wobei ein jeweiliger Betrag jedes der Abstände x_{1,} x₂ der ersten und zweiten Querschnittsflächen (xy₁, xy₂) normiert auf den Radius R₁(0°) bzw. R₂(0°) der jeweiligen ersten bzw. zweiten Querschnittsfläche (xy₁, xy₂) jeweils wenigstens einem 1,05-fachen, insb. wenigstens einem 1,2-fachen, des jeweiligen ersten Ausdehnungskoeffizienten a₁ bzw. a₂ der ersten bzw. zweiten Querschnittsfläche (xy₁, xy₂), und/oder jeweils höchstens einem 1,5-fachen, insb. höchstens einem 1,3-fachen, des jeweiligen ersten Ausdehnungskoeffizienten a₁ bzw. a₂ der ersten bzw. zweiten Querschnittsfläche (xy₁, xy₂) entspricht.

10. Strömungsteiler nach einem der vorherigen Ansprüche,
- wobei die erste Strömungsteileröffnung dafür eingerichtet ist, mit einem, insb. hohlzylindrischen, Endabschnitt einer ersten Fluidleitung, insb. stoffschlüssig, verbunden zu werden, derart, daß ein Lumen der ersten Fluidleitung unter Bildung eines durch die erste Strömungsteileröffnung hindurchführenden ersten Strömungspfades mit dem Lumen des Strömungsteilers kommuniziert;
- wobei die zweite Strömungsteileröffnung dafür eingerichtet ist, mit einem, insb. hohlzylindrischen, Endabschnitt einer zweiten Fluidleitung, insb. stoffschlüssig, verbunden zu werden, derart, daß ein Lumen der zweiten Fluidleitung unter Bildung eines durch die zweite Strömungsteileröffnung hindurchführenden, zum ersten Strömungspfad strömungstechnisch parallel geschalteten zweiten Strömungspfades mit dem Lumen des Strömungsteilers kommuniziert.

11. Strömungsteiler nach einem der vorherigen Ansprüche,
- wobei die Wandung des Strömungsteilers aus einem rostfreien Stahl, insb. einem Edelstahl, einem Duplexstahl oder einem Superduplexstahl, besteht; und/oder
- wobei die Wandung des Strömungsteilers aus einer Nickel-Molybdän-Legierung, insb. einer Nickel-Molybdän-Chrom-Legierung, besteht; und/oder
- wobei die Wandung des Strömungsteilers aus AISI 304, AISI 304L, AISI 316L, WNr. 1.4401, WNr. 1.4404, UNS S31603, WNr. 1.4410, WNr. 14501, Hastelloy B oder Hastelloy C, insb. Hastelloy C-22, besteht.

12. Fluidleitungssystem, umfassend:
- wenigstens einen einem Strömungsteiler gemäß einem der Ansprüche 1 bis 11 entsprechenden ersten Strömungsteiler (10);
- eine, insb. als starres und/oder zumindest abschnittsweise kreiszylindrisches Rohr ausgebildete, erste Fluidleitung (100) mit einem von einer Wandung, insb. aus einem Metall, umhüllten, sich von einem ersten Leitungsende (100+) der ersten Fluidleitung bis zu einem zweiten Leitungsende (100#) nämlicher ersten Fluidleitung (100) erstreckenden Lumen (100*);
- sowie wenigstens eine, insb. als starres und/oder zumindest abschnittsweise kreiszylindrisches Rohr ausgebildete und/oder zur ersten Fluidleitung baugleiche, zweite Fluidleitung (200) mit einem von einer Wandung, insb. aus einem Metall, umhüllten, sich von einem ersten Leitungsende (200+) der zweiten Fluidleitung bis zu einer in einem zweiten Leitungsende (200#) nämlicher zweiten Fluidleitung (200) erstreckenden Lumen (200*);
- wobei sowohl die erste Fluidleitung (100) mit deren ersten Leitungsende (100+) als auch die zweite Fluidleitung (200) mit deren ersten Leitungsende (200+) jeweils mit dem ersten Strömungsteilerende (10+) des ersten Strömungsteilers (10) verbunden sind, derart, daß das Lumen (100*) der ersten Fluidleitung (100) unter Bildung eines durch die erste Strömungsteileröffnung des ersten Strömungsteilers hindurchführenden ersten Strömungspfades und das Lumen (200*) der zweiten Fluidleitung (200) unter Bildung eines durch die zweite Strömungsteileröffnung des ersten Strömungsteilers hindurchführenden zweiten Strömungspfades jeweils mit dem Lumen (10*) des ersten Strömungsteilers (10) kommunizieren.

13. Fluidleitungssystem nach dem vorherigen Anspruch, weiters umfassend:
- einen einem Strömungsteiler gemäß einem der Ansprüche 1 bis 11 entsprechenden, insb. zum ersten Strömungsteiler (10) baugleichen, zweiten Strömungsteiler (20);
- wobei sowohl die erste Fluidleitung (100) mit deren zweiten Leitungsende (100#) als auch die Fluidleitung (200) mit deren zweiten Leitungsende (200#) jeweils mit dem ersten Strömungsteilerende (20+) des zweiten Strömungsteilers (20) verbunden sind, derart, daß das Lumen (100*) der ersten Fluidleitung (100) unter Bildung eines sowohl durch die erste Strömungsteileröffnung des ersten Strömungsteilers als auch durch die erste Strömungsteileröffnung des zweiten Strömungsteilers hindurchführenden ersten Strömungspfades und das Lumen (200*) der zweiten Fluidleitung (200) unter Bildung eines sowohl durch die zweite Strömungsteileröffnung des ersten Strömungsteilers (10) als auch durch die zweite Strömungsteileröffnung des zweiten Strömungsteilers (20) hindurchführenden, zum ersten Strömungspfad strömungstechnisch parallel geschalteten zweiten Strömungspfades sowohl mit dem Lumen (10*) des ersten Strömungsteilers (10) als auch mit dem Lumen (20*) des zweiten Strömungsteilers (20) kommunizieren.

14. Fluidleitungssystem nach Anspruch 12 oder 13, weiters umfassend:
- eine elektro-mechanische Erregeranordnung, die eingerichtet ist, elektrische Leistung in mechanische Schwingungen der ersten und zweiten Fluidleitungen bewirkende mechanische Leistung zu wandeln; und/oder
- eine Sensoranordnung, die eingerichtet ist, mechanische Schwingungen der ersten und zweiten Fluidleitungen zu erfassen und wenigstens ein Schwingungen wenigstens einer der ersten und zweiten Fluidleitungen repräsentierendes, insb. elektrisches, Schwingungssignal bereitzustellen.

15. Fluidleitungssystem nach einem der Ansprüche 12 bis 14,
- wobei die Wandung der ersten Fluidleitung (100) aus dem gleichen Material wie die Wandung der zweiten Fluidleitung (200) besteht; und/oder
- wobei die Wandung der ersten Fluidleitung (100) aus dem gleichen Material wie die Wandung des Strömungsteilers (10) besteht; und/oder
- wobei die Wandung der zweiten Fluidleitung (200) aus dem gleichen Material wie die Wandung des Strömungsteilers (10) besteht; und/oder
- wobei die Wandung der ersten Fluidleitung (100) aus einem rostfreien Stahl, insb. einem Edelstahl, einem Duplexstahl oder einem Superduplexstahl, besteht; und/oder
- wobei die Wandung der zweiten Fluidleitung (200) aus einem rostfreien Stahl, insb. einem Edelstahl, einem Duplexstahl oder einem Superduplexstahl, besteht; und/oder
- wobei die Wandung der ersten Fluidleitung (100) aus einer Nickel-Molybdän-Legierung, insb. einer Nickel-Molybdän-Chrom-Legierung, besteht; und/oder
- wobei die Wandung der zweiten Fluidleitung (100) aus einer Nickel-Molybdän-Legierung, insb. einer Nickel-Molybdän-Chrom-Legierung, besteht; und/oder
- wobei die Wandung der ersten Fluidleitung (100) aus AISI 304, AISI 304L, AISI 316L, WNr. 1.4401, WNr. 1.4404, UNS S31603, WNr. 1.4410, WNr. 14501, Hastelloy B oder Hastelloy C, insb. Hastelloy C-22, besteht; und/oder
- wobei die Wandung der zweiten Fluidleitung (200) aus AISI 304, AISI 304L, AISI 316L, WNr. 1.4401, WNr. 1.4404, UNS S31603, WNr. 1.4410, WNr. 14501, Hastelloy B oder Hastelloy C, insb. Hastelloy C-22, besteht.

## Claims

1. A flow divider, in particular a flow divider that can be used as a line branch or a line junction, for connecting fluid lines that are themselves used to carry a flowing fluid, wherein said flow divider comprises a lumen (10*) that is encapsulated by a wall, in particular produced from a metal, and extends from a first flow divider opening (10a), in particular with a circular shape, positioned in a first end of the flow divider (10+) and from a second flow divider opening (10b), in particular a circular opening, that is itself positioned in the first end of the flow divider (10+) at a distance from said first flow divider opening (10a), to a third flow divider opening (10c), in particular a circular opening, positioned in a second end of the flow divider (10#), in particular enclosed by a connection flange;
- wherein the lumen (10*)
▪ exhibits an imaginary main axis of inertia (z) that connects the first and second ends of the flow divider (10+, 10#)
▪ as well as a first plane of symmetry (xz) and a second plane of symmetry (yz), wherein the second plane of symmetry (yz) runs vertically to the first plane of symmetry (xz) and wherein the first and second planes of symmetry imaginarily intersect in the main axis of inertia (z);
- and wherein the lumen (10*) exhibits flat cross-sectional areas (xyᵢ) that are arranged vertically to the main axis of inertia (z) and each exhibit a geometric center located in the first plane of symmetry (xz),
▪ wherein
• a first cross-sectional area (xy₁), located in the first end of the flow divider (10+), whose geometric center is set at a distance from the main axis of inertia (z) of the lumen (10*), corresponds to the first flow divider opening (10a) of the flow divider (10),
• a second cross-sectional area (xy₂), also located in the first end of the flow divider (10+), whose geometric center is set at a distance both from the main axis of inertia (z) of the lumen (10*) and from the geometric center of the first cross-sectional area (xy₁), corresponds to the second flow divider opening (10b) of the flow divider (10)
• and a third cross-sectional area (xy₃), located in the second end of the flow divider (10#), whose geometric center is on the main axis of inertia (z) of the lumen (10*), corresponds to the third flow divider opening (10c) of the flow divider (10);
- wherein the first and second cross-sectional areas of the lumen each exhibit a distance (zᵢ) to the third cross-sectional area (xy₃), measured as a distance of a projection of the geometric center of the respective cross-sectional areas (xyᵢ) onto the main axis of inertia (z) at the geometric center of the third cross-sectional area (xy₃),
- and wherein each of the cross-sectional areas (xyᵢ) of the lumen exhibits radii (Ri) that stretch from the respective geometric center to the wall and are each arranged at an angle φ (-180°≤ φ ≤180°) to a respective reference axis (xᵢ), namely a notional axis that is located both in the respective cross-sectional area (xyᵢ) and in the first plane of symmetry of the lumen (10*), as well as being aligned vertically to its main axis of inertia (z);
- wherein each radius Rᵢ(0°) arranged at an angle of φ = 0° to the respective reference axis (xᵢ) points away from the second plane of symmetry (yz),
- **characterized in that** each radius Rᵢ(φ) of each cross-sectional area (xyᵢ) satisfies a calculation rule, defined by a set of coefficients, which is assigned to the respective cross-sectional area (xyᵢ) and contains seven coefficients, namely
▪ a first expansion coefficient aᵢ,
▪ a second expansion coefficient bᵢ,
▪ a first symmetry coefficient m₁ᵢ,
▪ a second symmetry coefficient m₂ᵢ,
▪ a first shape coefficient n₁ᵢ,
▪ a second shape coefficient n₂ᵢ
▪ and a third shape coefficient n₃ᵢ
wherein the set of coefficients is **Pᵢ** (**Pᵢ**= [aᵢ bᵢ m₁ᵢ m₂ᵢ n₁ᵢ n₂ᵢ n₃ᵢ]), and the calculation rule is scaled respectively with a largest radius R₀ of the third cross-sectional area (xy₃), wherein the calculation rule is fᵢ(φ, **Pᵢ**): $\begin{matrix}{R}_{i} \left(φ\right) = {R}_{0} ⋅ {r}_{i} \left(φ\right) = {f}_{i} \left(φ, {P}_{i}\right) = {f}_{i} \left(φ, \left[\begin{matrix}{a}_{i} & {b}_{i} & {m}_{1 i} & {m}_{2 i} & {n}_{1 i} & {n}_{2 i} & {n}_{3 i}\end{matrix}\right]\right) \\ = {R}_{0} ⋅ \sqrt[- {n}_{1 i}]{{\left|\frac{1}{{a}_{i}}cos\left(\frac{{m}_{1 i}}{4}φ\right)\right|}^{{n}_{2 i}} + {\left|\frac{1}{{b}_{i}}sin\left(\frac{{m}_{2 i}}{4}φ\right)\right|}^{{n}_{3 i}}}\end{matrix}$ in such a way
▪ that the radii R₁(φ) of the first cross-sectional area (xy₁) of the lumen (10*) comply with a first calculation rule P₁ = [aᵢ bᵢ m₁ᵢ m₂ᵢ n₁ᵢ n₂ᵢ n₃ᵢ], defined by a first set of coefficients f₁(φ, **P₁**) wherein a₁ = (0.4... 0.5), b₁ = (0.4... 0.5), in particular b₁ = a₁, m₁₁ = 4, m₂₁ = 4, n₁₁ = (2...3), in particular n₁₁ = 2,8, n₂₁ = (2... 3), in particular n₂₁ = 2.2 und n₃₁ = (2... 3), in particular n₃₁= 2,2, erfüllen,
▪ that the radii R₂(φ) of the second cross-sectional area (xy₂) of the lumen (10*) comply with a second calculation rule f₂(φ, P₂), defined by a second set of coefficients **P₂** = [a₂ b₂ m₁₂ m₂₂ n₁₂ n₂₂ n₃₂], wherein a₂ = a₁, b₂ = b₁, m₁₂ = m₁₁, m₂₂ = m₂₁, n₁₂ = n₁₁, n₂₂ = n₂₁, and n₃₂ = n₃₁,
▪ that the radii R₃(φ) of the third cross-sectional area (xy₃) of the lumen (10*) comply with a third calculation rule P₃ = [a₃ b₃ m₁₃ m₂₃ n₁₃ n₂₃ n₃₃], defined by a third set of coefficients f₃(φ, **P₃**), wherein a₃ = 1, b₃ = a₃, m₁₃ = 4, m₂₃ = m₁₃, n₁₃ = 2.0, n₂₃ = n₁₃ und n₃₃ = n₁₃,
▪ and that the radii R₄(φ) of a fourth cross-sectional area (xy₄) of the lumen (10*), positioned with its geometric center on the main axis of inertia (z) of the lumen (10*) at a distance z₄ to the third cross-sectional area (xy₃), which is greater than 20% of the distance z₁ (z₄ > 0.2 • z₁) and less than 45% of the distance z₁ (z₄ < 0.45 • z₁), comply with a fourth calculation rule f₄(φ, P₄), defined by a fourth set of coefficients **P₄** = [a₄ b₄ m₁₄ m₂₄ n₁₄ n₂₄ n₃₄], wherein a₄ =(0.95... 1), b₄ = (0.45... 0.7), m₁₄ = 4, m₂₄ = 4, n₁₄ = 3.0, n₂₄ = n₁₄, and n₃₄ = (3... 4).

2. A flow divider according to one of the preceding claims, wherein the radii R₅(φ) of a fifth cross-sectional area (xy₅) of the lumen (10*), positioned with its geometric center on the main axis of inertia (z) of the lumen (10*) at a distance z₅ to the third cross-sectional area (xy₃), which is no less than 10% of the distance z₁ (z₅ ≥ 0.1 • z₁) and no more than 20% of the distance z₁ (z₅ ≥ 0.2 • z₁), comply with a fifth calculation rule f₅(φ, **P₅**), defined by a fifth set of coefficients P₅ = [a₅ b₅ m₁₅ m₂₅ n₁₅ n₂₅ n₃₅], wherein a₅ = (0.97... 1), b₅ = (0.65... 1), m₁₅ = 4, m₂₅ = 4, n₁₅ = 3, n₂₅ = 3 and n₃₅ = (2... 3.5).

3. A flow divider according to the previous claim,
- wherein the fifth cross-sectional area (xy₅) is produced in such a way that its second expansion coefficient b₅ complies, based on its distance z₅, standardized to the distance z₁ of the first cross-sectional area (xy₁), with a calculation rule: ${b}_{5} = \left(47,2 … 47,8\right) ⋅ {\left(\frac{{z}_{5}}{{z}_{1}}\right)}^{2} - \left(17,5 … 17,18\right) ⋅ \left(\frac{{z}_{5}}{{z}_{1}}\right) + \left(2,2 … 2,4\right) ,$ in particular namely ${b}_{5} = 47,51 ⋅ {\left(\frac{{z}_{5}}{{z}_{1}}\right)}^{2} - 17,88 ⋅ \left(\frac{{z}_{5}}{{z}_{1}}\right) + 2,31$; and/or
wherein the fifth cross-sectional area (xy₅) is produced in such a way that its third shape coefficient n₃₅ complies, based on its distance z₅, standardized to the distance z₁ of the first cross-sectional area (xy₁), with a calculation rule: ${n}_{35} = \left(2,4 … 2,6\right) ⋅ \left(\frac{{z}_{5}}{{z}_{1}}\right) + \left(7,7 … 8\right) ,$ in particular namely ${n}_{35} = 2,55 ⋅ \left(\frac{{z}_{5}}{{z}_{1}}\right) + 7,87 , ;$ and/or
wherein the fifth cross-sectional area is produced in such a way that a ratio n₃₅/b₅ of its third shape coefficient n₃₅ to its second expansion coefficient b₅ is more than 2 and/or less than 6.

4. A flow divider according to one of the preceding claims,
- wherein the respective third shape coefficient n₃ᵢ of none of the cross-sectional areas (xyᵢ) of the lumen (10*) is greater than the third shape coefficient n₃₄ of the fourth cross-sectional area (xy₄); and/or
- wherein the fifth cross-sectional area is produced in such a way that a ratio n₃₄/b₄ of its third shape coefficient n₃₄ to its second expansion coefficient b₄ is no less than 5.5 and/or no more than 7; and/or
- wherein the respective first expansion coefficient aᵢ of each of the cross-sectional areas (xyᵢ) of the lumen (10*) is no less than 0.9 and/or no more than 1; and/or
- wherein the respective second expansion coefficient bᵢ of each of the cross-sectional areas (xyᵢ) of the lumen (10*) is no less than 0.4 and/or no more than 1; and/or
- wherein the respective first shape coefficient n₁ᵢ of each of the cross-sectional areas (xyᵢ) of the lumen (10*) is no less than 2 and/or no more than 3; and/or
- wherein the respective second shape coefficient n₂ᵢ of each of the cross-sectional areas (xyᵢ) of the lumen (10*) is no less than 2 and/or no more than 3; and/or
- wherein none of the first expansion coefficients ai of one of the sets of coefficients Pᵢ is greater than the first expansion coefficient a₁ of the first set of coefficients P₁; and/or
- wherein none of the second expansion coefficients ai of one of the sets of coefficients Pᵢ is greater than the second expansion coefficient b₁ of the first set of coefficients P₁; and/or
- wherein no cross-sectional area (xyᵢ) exhibits a surface area that is greater than a surface area of the third cross-sectional area (xy₃); and/or
- wherein no cross-sectional area (xyᵢ) exhibits a surface area that is smaller than a surface area of the first cross-sectional area (xy₁) or of the second cross-sectional area (xy₂); and/or
- wherein a ratio of a surface area of the third cross-sectional area (xy₁) to a surface area of the first cross-sectional area (xy₁) or of the second cross-sectional area (xy₂) is greater than 1 and/or smaller than 1.5; and/or
- wherein the distance z₁ of the first cross-sectional area (xy₁) to the third cross-sectional area (xy₃) is the same as the distance z₂ (z₂ = z₁) of the second cross-sectional area (xy₂) to the third cross-sectional area (xy₃); and/or
- wherein the distance z₁ of the first cross-sectional area (xy₁) to the third cross-sectional area (xy₃) and/or the distance z₂ (z₂ = z₁) of the second cross-sectional area (xy₂) to the third cross-sectional area (xy₃) corresponds to a length L of the lumen (10*).

5. A flow divider according to one of the preceding claims, wherein the radii R₆(φ) of a sixth cross-sectional area (xy₆) of the lumen (10*), positioned with its geometric center on the main axis of inertia (z) of the lumen (10*) at a distance z₆ to the third cross-sectional area (xy₃), which is more than 45% of the distance z₁ (z₆ > 0.45 • z₁) and less than 60% of the distance z₁ (_{z}6 < 0.6 • z₁), comply with a sixth calculation rule f₆(φ, P₆), defined by a sixth set of coefficients **P₆** = [a₆ b₆ m₁₆ m₂₆ n₁₆ n₂₆ n₃₆], wherein a₆ = (0.98... 1), b₆ = (0.7... 0.8), m₁₆ = 4, m₂₆ = 4, n₁₆ = 1, n₂₆ = (2... 2.5) and n₃₆ = (2.1... 2.8).

6. A flow divider according to the previous claim, wherein the sixth cross-sectional area is produced in such a way that its third shape coefficient n₃₆ complies, based on its distance z₆, standardized to the distance z₁ of the first cross-sectional area (xy₁), with a calculation rule: ${n}_{36} \left(3,4 … 3,6\right) ⋅ \left(\frac{{z}_{6}}{{z}_{1}}\right) + \left(0,5 … 0,7\right)$, in particular namely ${n}_{36} = 3,57 ⋅ \left(\frac{{z}_{6}}{{z}_{1}}\right) + 0,64$.

7. A flow divider according to one of the preceding claims,
- wherein the radii R₇(φ) of a seventh cross-sectional area (xy₇) of the lumen (10*), positioned with its geometric center at a distance from the main axis of inertia (z) of the lumen (10*) and at a distance z₇ to the third cross-sectional area (xy₃), which is more than 70% of the distance z₁ (z₇ > 0.7 • z₁) and less than 95% of the distance z₁ (z₇ < 0.95 • z₁), comply with a seventh calculation rule f₇ (φ, P₇), defined by a seventh set of coefficients **P₇** = [a₇ b₇ m₁₇ m₂₇ n₁₇ n₂₇ n₃₇], wherein a₇ = (0.40...0.55), b₇ = a₇, m₁₇ = (3... 4) m₂₇ = (3... 4) n₁₇ = (2.7... 2.8) n₂₇ = (2.3... 2.5), and n₃₇ = n₂₇,
- and wherein the radii R₈(φ) of an eighth cross-sectional area (xy₈) of the lumen (10*) with its geometric center positioned at a distance from the main axis of inertia (z) of the lumen (10*) and at a distance z₈ to the third cross-sectional area (xy₃), which is the same as the distance z₇ of the seventh cross-sectional area, comply with an eighth calculation rule f₈(φ, **P₈**), defined by an eighth set of coefficients P₈ = [a₈ b₈ m₁₈ m₂₈ n₁₈ n₂₈ n₃₈], wherein a₈ = a₇, b₈ = b₇, m₁₈ = m₁₇, m₂₈ = m₂₇, n₁₈ = n₁₇, n₂₈ = n₂₇, and n₃₈ = n₃₇.

8. A flow divider according to the previous claim,
- wherein the geometric center of the seventh cross-sectional area (xy₇) of the lumen exhibits a distance x₇ to the second plane of symmetry (yz), and the geometric center of the eighth cross-sectional area (xy₈) of the lumen exhibits a distance x₈ to the second plane of symmetry (yz),
- and wherein each of the distances x₇, x₈ of the seventh and eighth cross-sectional areas (xy₇, xy₈), standardized to the radius R₇(0°) or R₈(0°) of the respective seventh or eighth cross-sectional area (xy₇, xy₈), are each at least equal to the respective first expansion coefficient a₇ or a₈ of the seventh or eighth cross-sectional area (xy₇, xys) and/or each correspond to no more than 1.2 times the respective first expansion coefficient a₇ or a₈.

9. A flow divider according to one of the preceding claims,
- wherein the geometric center of the first cross-sectional area (xy₁) of the lumen exhibits a distance x₁ to the second plane of symmetry (yz), and the geometric center of the second cross-sectional area (xy₂) of the lumen exhibits a distance x₂ to the second plane of symmetry (yz),
- and wherein each of the distances x₁, x₂ of the first and second cross-sectional areas (xy₁, xy₂), standardized to the radius R₁(0°) or R₂(0°) of the respective first or second cross-sectional area (xy₁, xy₂) corresponds to at least 1.05 times, in particular at least 1.2 times, the respective first expansion coefficient a₁ or a₂ of the first or second cross-sectional area (xy₁, xy₂), and/or no more than 1.5 times, in particular no more than 1.3 times, the respective first expansion coefficient a₁ or a₂ of the first or second cross-sectional area (xy₁, xy₂).

10. A flow divider according to one of the preceding claims,
- wherein the first flow divider opening is configured to be connected, in particular with a bonded connection, to an end section, in particular exhibiting a hollow cylindrical shape, of a first fluid line, in such a way that a lumen of the first fluid line communicates with the lumen of the flow divider by forming a first flow path that passes through the first flow divider opening;
- wherein the second flow divider opening is configured to be connected, in particular with a bonded connection, to an end section, in particular exhibiting a hollow cylindrical shape, of a second fluid line, in such a way that a lumen of the second fluid line communicates with the lumen of the flow divider by forming a second flow path that passes through the second flow divider opening and is connected in parallel to the first flow path in terms of flow.

11. A flow divider according to one of the preceding claims,
- wherein the wall of the flow divider is produced from a rustproof steel, in particular a stainless steel, a duplex steel, or a super duplex steel; and/or
- wherein the wall of the flow divider is produced from a nickel-molybdenum alloy, in particular a nickel-molybdenum-chromium-alloy; and/or
- wherein the wall of the flow divider is produced from AISI 304, AISI 304L, AISI 316L, mat. no. 1.4401, mat. no. 1.4404, UNS S31603, mat. no. 1.4410, mat. no. 14501, Hastelloy B or Hastelloy C, in particular Hastelloy C-22.

12. A fluid line system, comprising:
- at least one first flow divider (10) that corresponds to a flow divider according to one of the claims 1 to 11;
- a first fluid line (100), in particular produced as a pipe that is rigid and/or exhibits a circular cylindrical form at least in sections, that is enclosed by a wall, in particular produced from a metal, with a lumen (100*) that extends from a first line end (100+) of the first fluid line to a second line end (100#) of said first fluid line (100);
- as well as at least one second fluid line (200), in particular produced as a pipe that is rigid and/or exhibits a circular cylindrical form at least in sections and/or is identical to the first fluid line, that is enclosed by a wall, in particular produced from a metal, with a lumen (200*) that extends from a first line end (200+) of the second fluid line to a second line end (200#) of said second fluid line (200);
- wherein both the first fluid line (100) is connected by its first line end (100+) and the second fluid line (200) is connected by its first line end (200+) to the first end of the flow divider (10+) of the first flow divider (10) in such a way that the lumen (100*) of the first fluid line (100), by forming a first flow path that passes through the first flow divider opening of the first flow divider, and the lumen (200*) of the second fluid line (200), by forming a second flow path that passes through the second flow divider opening of the first flow divider, each communicate with the lumen (10*) of the first flow divider (10).

13. A fluid line system according to the previous claim, further comprising:
- a second flow divider (20) that corresponds to a flow divider according to one of the claims 1 to 11 and is, in particular, identical to the first flow divider (10);
- wherein both the first fluid line (100) is connected by its second line end (100#) and the second fluid line (200) is connected by its second line end (200#) to the first end of the flow divider (20+) of the second flow divider (20) in such a way that the lumen (100*) of the first fluid line (100), by forming a first flow path that passes both through the first flow divider opening of the first flow divider and through the first flow divider opening of the second flow divider, and the lumen (200*) of the second fluid line (200), by forming a second flow path that passes both through the second flow divider opening of the first flow divider (10) and through the second flow divider opening of the second flow divider (20) and is connected in parallel to the first flow path in terms of flow, communicate both with the lumen (10*) of the first flow divider (10) and with the lumen (20*) of the second flow divider (20).

14. A fluid line system according to claim 12 or 13, further comprising:
- an electro-mechanical exciter arrangement that is configured to convert electrical power into mechanical power in order to produce mechanical vibrations in the first and second fluid lines; and/or
- a sensor arrangement that is configured to record mechanical vibrations in the first and second fluid lines and provide a vibration signal, in particular an electrical vibration signal, that represents at least one of the first and second fluid lines.

15. A fluid line system according to one of the claims 12 to 14,
- wherein the wall of the first fluid line (100) is produced from the same material as the wall of the second fluid line (200); and/or
- wherein the wall of the first fluid line (100) is produced from the same material as the wall of the flow divider (10); and/or
- wherein the wall of the second fluid line (200) is produced from the same material as the wall of the flow divider (10); and/or
- wherein the wall of the first fluid line (100) is produced from a rustproof steel, in particular a stainless steel, a duplex steel, or a super duplex steel; and/or
- wherein the wall of the second fluid line (200) is produced from a rustproof steel, in particular a stainless steel, a duplex steel, or a super duplex steel; and/or
- wherein the wall of the first fluid line (100) is produced from a nickel-molybdenum alloy, in particular a nickel-molybdenum-chromium-alloy; and/or
- wherein the wall of the second fluid line (100) is produced from a nickel-molybdenum alloy, in particular a nickel-molybdenum-chromium-alloy; and/or
- wherein the wall of the first fluid line (100) is produced from AISI 304, AISI 304L, AISI 316L, mat. no. 1.4401, mat. no. 1.4404, UNS S31603, mat. no. 1.4410, mat. no. 14501, Hastelloy B or Hastelloy C, in particular Hastelloy C-22; and/or
- wherein the wall of the second fluid line (200) is produced from AISI 304, AISI 304L, AISI 316L, mat. no. 1.4401, mat. no. 1.4404, UNS S31603, mat. no. 1.4410, mat. no. 14501, Hastelloy B or Hastelloy C, in particular Hastelloy C-22.

## Revendications

1. Diviseur de débit, notamment un diviseur de débit servant de dérivation de conduite ou de jonction de conduite, lequel diviseur est destiné à relier des conduites de fluide servant au guidage d'un fluide en écoulement, lequel diviseur de débit comprend un canal intérieur (10*) enveloppé par une paroi, notamment en métal, lequel canal s'étend aussi bien d'une première ouverture de diviseur de débit (10a), notamment circulaire, laquelle ouverture est située à une première extrémité de diviseur de débit (10+), que d'une deuxième ouverture de diviseur de débit (10b), notamment circulaire, laquelle ouverture est située à distance de la première ouverture de diviseur de débit (10a) et à la première extrémité de diviseur de débit (10+), jusqu'à une troisième ouverture de diviseur de débit (10c), notamment circulaire, laquelle ouverture est située à une deuxième extrémité de diviseur de débit (10#) et laquelle ouverture est notamment saisie par une bride de raccordement ;
- pour lequel le canal intérieur (10*) présente
-- un axe principal d'inertie (z) reliant de manière imaginaire la première et la deuxième extrémité de diviseur de débit (10+, 10#)
-- ainsi qu'un premier plan de symétrie (xz) et un deuxième plan de symétrie (yz), lequel est perpendiculaire au premier plan, lesquels premier et deuxième plans de symétrie se coupent de manière imaginaire dans l'axe principal d'inertie (z) ;
- et pour lequel le canal intérieur (10*) présente des surfaces de section transversale planes (xyᵢ) perpendiculaires à l'axe principal d'inertie (z), surface dont un centre de gravité géométrique est respectivement situé dans le premier plan de symétrie (xz),
-- surface parmi lesquelles
--- une première surface de section transversale (xy₁) , laquelle surface est située dans la première extrémité de diviseur de débit (10+) et dont le centre de gravité géométrique est éloigné de l'axe principal d'inertie (z) du canal intérieur (10*), correspond à la première ouverture (10a) du diviseur de débit (10),
--- une deuxième surface transversale (xy₂), laquelle surface est également située dans la première extrémité de diviseur de débit (10+) et dont le centre de gravité géométrique est éloigné aussi bien de l'axe principal d'inertie (z) du canal intérieur (10*) que du centre de gravité géométrique de la première surface transversale (xy₁), correspond à la deuxième ouverture (10b) du diviseur de débit (10),
--- et une troisième surface de section transversale (xy₃), laquelle surface est située dans la deuxième extrémité de diviseur de débit (10#) et dont le centre de gravité géométrique se trouve sur l'axe principal d'inertie (z) du canal intérieur (10*), correspond à la troisième ouverture (10c) du diviseur de débit (10) ;
- pour lequel la première et la deuxième surface de section transversale du canal intérieur présentent chacune une distance zᵢ par rapport à la troisième surface de section transversale (xy₃), laquelle distance est mesurée comme une distance d'une projection du centre de gravité géométrique de chacune des surfaces de section transversale (xyᵢ) sur l'axe principal d'inertie (z) au centre de gravité géométrique de la troisième surface de section transversale (xy₃),
- et pour lequel chacune des surfaces de section transversale (xyᵢ) du canal intérieur présente des rayons (Rᵢ), lesquelles surfaces s'étendent chacune du centre de gravité géométrique respectif jusqu'à la paroi et forment chacune un angle ϕ (-180° ≤ ϕ ≤ 180°) par rapport à un axe de référence respectif (xᵢ), à savoir un axe imaginaire situé aussi bien dans la surface de section transversale (xyᵢ) respective que dans le premier plan de symétrie du canal intérieur (10*) et en outre perpendiculaire à son axe principal d'inertie (z) ;
- pour lequel chaque rayon Rᵢ(0°), faisant un angle ϕ = 0° par rapport à l'axe de référence respectif (xᵢ), s'éloigne du deuxième plan de symétrie (yz),
- **caractérisé en ce que** chaque rayon Rᵢ(ϕ) de chaque surface de section transversale (xyᵢ) satisfait à la règle de calcul fᵢ(ϕ, **Pᵢ**) suivante : $\begin{matrix}{R}_{i} \left(φ\right) = {R}_{0} ⋅ {r}_{i} \left(φ\right) = {f}_{i} \left(φ, {P}_{i}\right) = {f}_{i} \left(φ, \left[\begin{matrix}{a}_{i} & {b}_{i} & {m}_{1 i} & {m}_{2 i} & {n}_{1 i} & {n}_{2 i} & {n}_{3 i}\end{matrix}\right]\right) \\ = {R}_{0} ⋅ \sqrt[- {n}_{1 i}]{{\left|\frac{1}{{a}_{i}}cos\left(\frac{{m}_{1 i}}{4}φ\right)\right|}^{{n}_{2 i}} + {\left|\frac{1}{{b}_{i}}sin\left(\frac{{m}_{2 i}}{4}φ\right)\right|}^{{n}_{3 i}}}\end{matrix}$ laquelle règle est définie par un jeu de coefficients Pᵢ (Pᵢ = [aᵢ bᵢ m₁ᵢ m₂ᵢ n₁ᵢ n₂ᵢ n₃ᵢ]), lequel jeu est attribué à la surface de section transversale (xyᵢ) respective et lequel jeu contient respectivement sept coefficients, à savoir
-- un premier coefficient de dilatation aᵢ,
-- un deuxième coefficient de dilatation bᵢ,
-- un premier coefficient de symétrie m₁ᵢ,
-- un deuxième coefficient de symétrie m₂ᵢ,
-- un premier coefficient de forme n₁ᵢ,
-- un deuxième coefficient de forme n₂ᵢ,
-- et un troisième coefficient de forme n₃ᵢ
de telle sorte
-- que les rayons R₁(ϕ) de la première surface de section transversale (xy₁) du canal intérieur (10*) satisfont à une première règle de calcul f₁(ϕ, **P₁**) définie par un premier jeu de coefficients P₁ = [a₁ b₁ m₁₁ m₂₁ n₁₁ n₂₁ n₃₁] avec a₁ = (0,4...0,5), b₁ = (0,4...0,5), notamment b₁ = a₁, m₁₁ = 4, m₂₁ = 4, n₁₁ = (2...3), notamment n₁₁ = 2,8, n₂₁ = (2...3), notamment n₂₁ = 2,2 et n₃₁ = (2...3), notamment n₃₁ = 2,2,
-- que les rayons R₂(ϕ) de la deuxième surface de section transversale (xy₂) du canal intérieur (10*) satisfont à une deuxième règle de calcul f₂(ϕ, **P₂**) définie par un deuxième jeu de coefficients P₂ = [a₂ b₂ m₁₂ m₂₂ n₁₂ n₂₂ n₃₂] avec a₂ = a₁, b₂ = b₁, m₁₂ = m₁₁, m₂₂ = m₂₁, n₁₂ = n₁₁, n₂₂ = n₂₁, et n₃₂ = n₃₁,
-- que les rayons R₃(ϕ) de la troisième surface de section transversale (xys) du canal intérieur (10*) satisfont à une troisième règle de calcul f₃(ϕ, **P₃**) définie par un troisième jeu de coefficients P₃ = [a₃ b₃ m₁₃ m₂₃ n₁₃ n₂₃ n₃₃] avec a₃ = 1, b₃ = a₃, m₁₃ = 4, m₂₃ = m₁₃, n₁₃ = 2,0, n₂₃ = n₁₃, et n₃₃ = n₁₃,
-- et que les rayons R₄(ϕ) de la quatrième surface de section transversale (xy₄) du canal intérieur (10*) - surface dont le centre de gravité géométrique est situé sur l'axe principal d'inertie (z) du canal intérieur (10*) et à une distance z₄ de la troisième surface de section transversale (xy₃) qui est supérieure à 20 % de la distance z₁ (z₄ > 0,2 · z₁) et inférieure à 45 % de la distance z₁ (z₄ < 0,45 · z₁) - satisfont à une quatrième règle de calcul f₄(ϕ, **P₄**) définie par un quatrième jeu de coefficients P4 = [a₄ b₄ m₁₄ m₂₄ n₁₄ n₂₄ n₃₄] avec a₄ =(0,95...1), b₄ = (0,45...0,7), m₁₄ = 4, m₂₄ = 4, n₁₄ = 3,0, n₂₄ = n₁₄ et n₃₄ = (3...4).

2. Diviseur de débit selon la revendication précédente, pour lequel les rayons R₅(ϕ) d'une troisième surface de section transversale (xy₃) - surface dont le centre de gravité géométrique se trouve sur l'axe principal d'inertie (z) du canal intérieur (10*), laquelle surface est située à une distance z₅ de la troisième surface de section transversale (xy₃) qui n'est pas inférieure à 10 % de la distance z₁ (z₅ ≥ 0,1 · z₁) et pas supérieure à 20 % de la distance z₁ (z₅ ≤ 0,2 · z₁) - satisfont à une cinquième règle de calcul f₅(ϕ, **P₅**) définie par un cinquième jeu de coefficients P₅ = [a₅ b₅ m₁₅ m₂₅ n₁₅ n₂₅ n₃₅] avec a₅ = (0,97...1), b₅ = (0,65... 1), m₁₅ = 4, m₂₅ = 4, n₁₅ = 3, n₂₅ = 3 et n₃₅ = (2...3,5).

3. Diviseur de débit selon la revendication précédente,
- pour lequel la cinquième surface de section transversale (xy₅) est réalisée de telle sorte que son deuxième coefficient de dilatation b₅, en fonction de sa distance z₅, normalisée par rapport à la distance z₁ de la première surface de section transversale (xy₁), satisfait à la règle de calcul suivante : ${\text{b}}_{5} = \left(47,2 … 47,8\right) ⋅ {\left({\text{z}}_{5} / {\text{z}}_{1}\right)}^{2} - \left(17,5 … 17,18\right) ⋅ \left({\text{z}}_{5} / {\text{z}}_{1}\right) + \left(2,2 … 2,4\right) ,$ notamment à savoir ${b}_{5} = 47,51 ⋅ {\left({z}_{5}/{z}_{1}\right)}^{2} - 17,88 ⋅ \left({z}_{5}/{z}_{1}\right) + 2,31 ;$ et/ou
- pour lequel la cinquième surface de section transversale (xy₅) est réalisée de telle sorte que son troisième coefficient de forme n₃₅, en fonction de sa distance z₅ normalisée par rapport à la distance z₁ de la première surface de section transversale (xy₁), satisfait à la règle de calcul suivante :
n₃₅ = (2,4 ... 2,6) · (z₅ / z₁) + (7,7 ... 8), notamment à savoir n₃₅ = 2,55 · (z₅ / z₁) + 7,87 ; et/ou
- pour lequel la cinquième surface de section transversale est réalisée de telle sorte qu'un rapport n₃₅ / b₅ de son troisième coefficient de forme n₃₅ à son deuxième coefficient de dilatation b₅ est supérieur à 2 et/ou inférieur à 6.

4. Diviseur de débit selon l'une des revendications précédentes,
- pour lequel aucune des surfaces de section transversale (xyᵢ) du canal intérieur (10*) n'a un troisième coefficient de forme n₃ᵢ supérieur au troisième coefficient de forme n₃₄ de la quatrième surface de section transversale (xy₄) ; et/ou
- pour lequel la quatrième surface de section transversale est formée de telle sorte qu'un rapport n₃₄/ b₄ de son troisième coefficient de forme n₃₄ à son deuxième coefficient de dilatation b₄ n'est pas inférieur à 5,5 et/ou n'est pas supérieur à 7 ; et/ou
- pour lequel, parmi chacune des surfaces de section transversale (xyᵢ) du canal intérieur (10*), le premier coefficient de dilatation aᵢ respectif n'est pas inférieur à 0,9 et/ou n'est pas supérieur à 1 ; et/ou
- pour lequel, parmi chacune des surfaces de section transversale (xyᵢ) du canal intérieur (10*), le deuxième coefficient de dilatation bᵢ respectif n'est pas inférieur à 0,4 et/ou n'est pas supérieur à 1 ; et/ou
- pour lequel, parmi chacune des surfaces de section transversale (xyᵢ) du canal intérieur (10*), le premier coefficient de forme n₁ᵢ respectif n'est pas inférieur à 2 et/ou n'est pas supérieur à 3 ; et/ou
- pour lequel, parmi chacune des surfaces de section transversale (xyᵢ) du canal intérieur (10*), le deuxième coefficient de forme n₂ᵢ respectif n'est pas inférieur à 2 et/ou n'est pas supérieur à 3 ; et/ou
- pour lequel aucun des premiers coefficients de dilatation aᵢ de l'un des jeux de coefficients Pᵢ n'est supérieur au premier coefficient de dilatation a₁ du premier jeu de coefficients P₁ ; et/ou
- pour lequel aucun des deuxièmes coefficients de dilatation bᵢ de l'un des jeux de coefficients Pᵢ n'est supérieur au deuxième coefficient de dilatation bᵢ du premier jeu de coefficients Pᵢ ; et/ou
- pour lequel aucune surface de section transversale (xyᵢ) ne présente une aire supérieure à une aire de la troisième surface de section transversale (xy₃) ; et/ou
- pour lequel aucune surface de section transversale (xyᵢ) ne présente une aire inférieure à une aire de la première surface de section transversale (xy₁) ou de la deuxième surface de section transversale (xy₂) ; et/ou
- pour lequel un rapport d'une aire de la troisième surface de section transversale (xy₃) à une aire de la première surface de section transversale (xy₁) ou de la deuxième surface de section transversale (xy₂) est respectivement supérieur à 1 et/ou inférieur à 1,5 ; et/ou
- pour lequel la distance z₁ de la première surface de section transversale (xy₁) à la troisième surface de section transversale (xy₃) est égale à la distance z₂ (z₂ = z₁) de la deuxième surface de section transversale (xy₂) à la troisième surface de section transversale (xy₃) ; et/ou
- pour lequel la distance z₁ de la première surface de section transversale (xy₁) à la troisième surface de section transversale (xy₃) et/ou la distance z₂ (z₂ = z₁) de la deuxième surface de section transversale (xy₂) à la troisième surface de section transversale (xy₃) correspondant à une longueur L du canal intérieur (10*).

5. Diviseur de débit selon l'une des revendications précédentes, pour lequel les rayons R₆(ϕ) d'une sixième surface de section transversale (xy₆) du canal intérieur (10*) - surface dont le centre de gravité géométrique est situé sur l'axe principal d'inertie (z) du canal intérieur (10*), située à une distance z₆ de la troisième surface de section transversale (xy₃) qui est supérieure à 45 % de la distance z₁ (z₆ > 0,45 · z₁) et inférieure à 60 % de la distance z₁ (z₆ < 0,6 · z₁), satisfont à une sixième règle de calcul f₆(ϕ, **P₆**) définie par un sixième jeu de coefficients P₆ = [a₆ b₆ m₁₆ m₂₆ n₁₆ n₂₆ n₃₆] avec a₆ = (0,98... 1 ), b₆ = (0,7...0,8), m₁₆ = 4, m₂₆ = 4, n₁₆ = 1 , n₂₆ = (2...2,5) et n₃₆ = (2,1...2,8).

6. Diviseur de débit selon la revendication précédente, pour lequel la sixième surface de section transversale est réalisée de telle sorte que son troisième coefficient de forme n₃₆, en fonction de sa distance z₆ normalisée par rapport à la distance z₁ de la première surface de section transversale (xy₁), satisfait à la règle de calcul suivante :
n₃₆ = (3,4 ... 3,6) · (z₆ / z₁) + (0,5 ... 0,7), notamment à savoir n₃₆ = 3,57 · (z₆ / z₁) + 0,64.

7. Diviseur de débit selon l'une des revendications précédentes,
- pour lequel les rayons R₇(ϕ) d'une septième surface de section transversale (xy₇) du canal intérieur (10*) - surface dont le centre de gravité géométrique est éloigné de l'axe principal d'inertie (z) du canal intérieur (10*) et laquelle surface se trouve à une distance z₇ de la troisième surface de section transversale (xys), laquelle distance est supérieure à 70 % de la distance z₁ (z₇ > 0,7 · z₁) et inférieure à 95 % de la distance z₁ (z₇ < 0,95 · z₁) - satisfont à une septième règle de calcul f₇(ϕ, **P₇**) définie par un septième jeu de coefficients P₇ = [a₇ b₇ m₁₇ m₂₇ n₁₇ n₂₇ n₃₇] avec a₇ = (0,40.. 0,55), b₇ = a₇, m₁₇ = (3...4) m₂₇ = (3...4) n₁₇ = (2,7 ... 2,8) n₂₇ = (2,3...2,5) et n₃₇ = n₂₇,
- et pour lequel les rayons R₈(ϕ) d'une huitième surface de section transversale (xy₈) du canal intérieur (10*) - surface dont le centre de gravité géométrique est éloigné de l'axe principal d'inertie (z) du canal intérieur (10*) et laquelle surface se trouve à une distance z₈ de la troisième surface de section transversale (xys), laquelle distance est égale à la distance z₇ de la septième surface de section transversale, (xy₇) - satisfont à une huitième règle de calcul f₈(ϕ, **P₈**) définie par un huitième jeu de coefficients P₈ = [a₈ b₈ m₁₈ m₂₈ n₁₈ n₂₈ n₃₈] avec a₈ = a₇, b₈ = b₇, m₁₈ = m₁₇, m₂₈ = m₂₇, n₁₈ = n₁₇, n₂₈ = n₂₇ et n₃₈ = n₃₇.

8. Diviseur de débit selon la revendication précédente,
- pour lequel le centre de gravité géométrique de la septième surface de section transversale (xy₇) du canal intérieur est espacé du deuxième plan de symétrie (yz) et le centre de gravité géométrique de la huitième surface de section transversale (xy₈) du canal intérieur est espacé du deuxième plan de symétrie (yz),
- et pour lequel une valeur absolue respective de chacune des distances des septième et huitième surfaces de section transversale (xy₇, xy₈) normalisée au rayon R₇(0°) ou R₈(0°) de la septième ou huitième surface de section transversale (xy₇, xy₈) respective est respectivement au moins égale au premier coefficient de dilatation a₇ ou a₈ respectif de la septième ou huitième surface de section transversale (xy₇, xy₈) et/ou correspond respectivement à au plus 1,2 fois le premier coefficient de dilatation respectif a₇ ou a₈.

9. Diviseur de débit selon l'une des revendications précédentes,
- pour lequel le centre de gravité géométrique de la première surface de section transversale (xy₁) du canal intérieur présente une distance x₁ par rapport au deuxième plan de symétrie (yz) et le centre de gravité géométrique de la deuxième surface de section transversale (xy₂) du canal intérieur présente une distance x₂ par rapport au deuxième plan de symétrie (yz),
- et pour lequel une valeur absolue respective de chacune des distances x₁, x₂ des première et deuxième surfaces transversales (xy₁, xy₂) normalisées par rapport au rayon R₁(0°) ou R₂(0°) de la première ou deuxième surface transversale (xy₁, xy₂) respective correspond respectivement à au moins 1,05 fois, notamment à au moins 1,2 fois, le premier coefficient de dilatation a₁ ou a₂ respectif de la première ou de la deuxième surface de section transversale (xy₁, xy₂), et/ou au maximum 1,5 fois, notamment au maximum 1,3 fois, le premier coefficient de dilatation a₁ ou a₂ respectif de la première ou de la deuxième surface de section transversale (xy₁, xy₂).

10. Diviseur de débit selon l'une des revendications précédentes,
- pour lequel la première ouverture de diviseur de débit est conçue pour être reliée, notamment par liaison de matière, à une section d'extrémité, notamment cylindrique creuse, d'une première conduite de fluide, de telle sorte qu'un canal intérieur de la première conduite de fluide communique avec le canal intérieur du diviseur de débit en formant un premier chemin d'écoulement passant à travers la première ouverture de diviseur de débit ;
- pour lequel la deuxième ouverture de diviseur de débit est conçue pour être reliée, notamment par liaison de matière, à une section d'extrémité, notamment cylindrique creuse, d'une deuxième conduite de fluide, de telle sorte qu'un canal intérieur de la deuxième conduite de fluide communique avec le canal intérieur du diviseur de débit en formant un deuxième chemin d'écoulement passant à travers la deuxième ouverture de diviseur de débit, lequel deuxième chemin d'écoulement est parallèle en terme d'écoulement au premier chemin d'écoulement.

11. Diviseur de débit selon l'une des revendications précédentes,
- pour lequel la paroi du diviseur de débit est constituée d'un acier inoxydable, notamment d'un acier spécial, d'un acier duplex ou d'un acier superduplex ; et/ou
- pour lequel la paroi du diviseur de débit est constituée d'un alliage de nickel-molybdène, notamment d'un alliage de nickel-molybdène-chrome ; et/ou
- pour lequel la paroi du diviseur de débit est en AISI 304, AISI 304L, AISI 316L, WNr. 1.4401 , WNr. 1.4404, UNS S31603, WNr. 1.4410, WNr. 14501, Hastelloy B ou Hastelloy C, notamment Hastelloy C-22.

12. Système de conduites de fluide, comprenant :
- au moins un premier diviseur de débit (10) correspondant à un diviseur de débit selon l'une des revendications 1 à 11 ;
- une première conduite de fluide (100), réalisée notamment sous la forme d'un tube rigide et/ou au moins partiellement cylindrique circulaire, laquelle première conduite présente un canal intérieur (100*) enveloppé par une paroi, notamment en un métal, lequel canal s'étend d'une première extrémité de conduite (100+) de la première conduite de fluide (100) jusqu'à une deuxième extrémité de conduite (100#) de la même première conduite de fluide (100) ;
- ainsi qu'au moins une deuxième conduite de fluide (200), réalisée notamment sous forme de tube rigide et/ou au moins partiellement cylindrique circulaire et/ou de construction identique à la première conduite de fluide, laquelle deuxième conduite présente un canal intérieur (200*) enveloppé par une paroi, notamment en métal, lequel canal s'étend d'une première extrémité de conduite (200+) de la deuxième conduite de fluide (200) jusqu'à une deuxième extrémité de conduite (200#) de la même deuxième conduite de fluide (200) ;
- aussi bien la première conduite de fluide (100) avec sa première extrémité de conduite (100+) que la deuxième conduite de fluide (200) avec sa première extrémité de conduite (200+) étant reliées respectivement à la première extrémité (10+) du premier diviseur de débit (10), de telle sorte que le canal intérieur (100*) de la première conduite de fluide (100), en formant un premier chemin d'écoulement passant par la première ouverture du premier diviseur de débit, et que le canal intérieur (200*) de la deuxième conduite de fluide (200), en formant un deuxième chemin d'écoulement passant par la deuxième ouverture du premier diviseur de débit, communiquent avec le canal intérieur (10*) du premier diviseur de débit (10).

13. Système de conduites de fluide selon la revendication précédente, comprenant en outre :
- un deuxième diviseur de débit (20) correspondant à un diviseur de débit selon l'une des revendications 1 à 11, lequel deuxième diviseur est notamment de construction identique au premier diviseur de débit (10) ;
- aussi bien la première conduite de fluide (100) avec sa deuxième extrémité de conduite (100#) que la deuxième conduite de fluide (200) avec sa deuxième extrémité de conduite (200#) étant respectivement reliées à la première extrémité (20+) du deuxième diviseur de débit (20), de telle sorte que le canal intérieur (100*) de la première conduite de fluide (100), en formant un premier chemin d'écoulement passant aussi bien par la première ouverture du premier diviseur de débit que par la première ouverture du deuxième diviseur de débit, et que le canal intérieur (200*) de la deuxième conduite de fluide (200), en formant un deuxième chemin d'écoulement passant aussi bien par la deuxième ouverture du premier diviseur de débit (10) que par la deuxième ouverture du deuxième diviseur de débit (20), lequel deuxième chemin d'écoulement est parallèle en terme d'écoulement au premier chemin d'écoulement, communiquent avec le canal intérieur (10*) du premier diviseur de débit (10) ainsi qu'avec le canal intérieur (20*) du deuxième diviseur de débit (20).

14. Système de conduites de fluide selon la revendication 12 ou 13, comprenant en outre :
- un circuit d'excitation électromécanique, lequel est conçu pour convertir la puissance électrique en puissance mécanique provoquant des vibrations mécaniques des premières et deuxièmes conduites de fluide ; et/ou
- un agencement de capteurs, lequel est conçu pour détecter les vibrations mécaniques des premières et deuxièmes conduites de fluide et pour fournir au moins un signal de vibration, notamment électrique, représentant les vibrations d'au moins une des premières et deuxièmes conduites de fluide.

15. Système de conduites de fluide selon l'une des revendications 12 à 14,
- pour lequel la paroi de la première conduite de fluide (100) est constituée du même matériau que la paroi de la deuxième conduite de fluide (200) ; et/ou
- pour lequel la paroi de la première conduite de fluide (100) est constituée du même matériau que la paroi du diviseur de débit (10) ; et/ou
- pour lequel la paroi de la deuxième conduite de fluide (200) est constituée du même matériau que la paroi du diviseur de débit (10) ; et/ou
- pour lequel la paroi de la première conduite de fluide (100) est constituée d'un acier inoxydable, notamment d'un acier spécial, d'un acier duplex ou d'un acier superduplex ; et/ou
- pour lequel la paroi de la deuxième conduite de fluide (200) est constituée d'un acier inoxydable, notamment d'un acier spécial, d'un acier duplex ou d'un acier superduplex ; et/ou
- pour lequel la paroi de la première conduite de fluide (100) est constituée d'un alliage de nickel-molybdène, notamment d'un alliage de nickel-molybdène-chrome ; et/ou
- pour lequel la paroi de la deuxième conduite de fluide (100) est constituée d'un alliage de nickel-molybdène, notamment d'un alliage de nickel-molybdène-chrome ; et/ou
- pour lequel la paroi de la première conduite de fluide (100) est en AISI 304, AISI 304L, AISI 316L, WNr. 1.4401, WNr. 1.4404, UNS S31603, WNr. 1.4410, WNr. 14501, Hastelloy B ou Hastelloy C, notamment Hastelloy C-22 ; et/ou
- pour lequel la paroi de la deuxième conduite de fluide (200) est en AISI 304, AISI 304L, AISI 316L, WNr. 1.4401 , WNr. 1.4404, UNS S31603, WNr. 1.4410, WNr. 14501 , Hastelloy B ou Hastelloy C, notamment Hastelloy C-22.
